(19) Europäisches Patentamt
European Patent Office
Office européen des brevets

(11) **EP 4 625 345 A1**

(12) **EUROPEAN PATENT APPLICATION**

(43) Date of publication:
**01.10.2025 Bulletin 2025/40**

(21) Application number: **24192811.8**

(22) Date of filing: **05.08.2024**

(51) International Patent Classification (IPC):
**G06V 10/26** (2022.01)    **G06V 10/426** (2022.01)
**G06V 10/80** (2022.01)    **G06V 10/82** (2022.01)
**G06V 20/70** (2022.01)

(52) Cooperative Patent Classification (CPC):
**G06V 10/82; G06V 10/26; G06V 10/426;**
**G06V 10/806; G06V 20/70;** G06V 20/20;
G06V 20/56; G06V 2201/12

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.03.2024 IN 202411025664**

(71) Applicant: **FUJITSU LIMITED**
**Kawasaki-shi, Kanagawa 211-8588 (JP)**

(72) Inventors:
• **DE, Arkadipta**
  **560037 Bangalore (IN)**
• **GUJJARI, Venkata Ujwal Sai**
  **560037 Bangalore (IN)**
• **SENGAR, Vartika**
  **560037 Bangalore (IN)**
• **RATHORE, Anuj**
  **560037 Bangalore (IN)**
• **THAPAR, Daksh**
  **560037 Bangalore (IN)**

(74) Representative: **Haseltine Lake Kempner LLP**
**Cheapside House**
**138 Cheapside**
**London EC2V 6BJ (GB)**

(54) **POINT CLOUD CLASSIFICATION**

(57) A computer-implemented method of performing point cloud classification comprising: selecting a point cloud for classification; obtaining a plurality of subsets of the selected point cloud associated with a plurality of parts of the selected point cloud; obtaining a graph structure representation of the subsets, the graph structure representation comprising nodes associated with each subset and one or more edges connecting the nodes; obtaining a graph structure embedding encapsulating structural relationships between the subsets, comprising inputting the graph structure representation into a graph encoder convolutional neural network; deriving a point cloud representation from the graph structure embedding; and classifying the point cloud representation, comprising inputting the point cloud representation into a classification neural network to obtain a classification of the selected point cloud.

FIG. 6

## Description

### FIELD

The present invention relates to training and using a point cloud classifier, and in particular to a computer-implemented method, a computer program, and an information programming apparatus.

### BACKGROUND

Three-dimensional (3D) scene analysis to automatically assign the content of the scene with meaningful labels is an increasingly important technique, with broad applicability across photogrammetry, remote sensing, computer vision and robotics. Due to the increasing availability of 3D point cloud data, it has become crucial in the field to be able to accurately classify 3D point clouds, particularly for applications such as autonomous driving, augmented reality, medical imaging and geographic information systems.

A core problem in the field is that the point cloud classification models are trained in a specific and labelled source domain dataset, but in use are required to classify features in multiple unseen and unlabeled target domains. Indeed, typically, the source domain for training is a dataset with a large amount of labelled pristine (clean) examples, whereas the target domains are unseen datasets with either a small number of labelled examples or no labelled examples at all, and usually including noisy datapoints. For instance, the target data set may include different or inconsistent data acquisition processes. Hence to accurately classify features the classification models must have a level of domain generalization, allowing them to accurately classify features in new unseen and unlabeled domains despite only having been trained on other labelled domains. For instance, in the specific example of autonomous driving, 3D point clouds are used to represent the environment around the vehicle. Here, a classification model trained on one domain, such as the dataset of a specific city, may face difficulty accurately classifying features in a different domain, such as a different city, due to variations in the environment.

A key aspect of improving the accuracy of point cloud classification models concerns improving the level of 3D domain generalization. In essence, the approach is a machine learning technique which improves the performance of a classification model through identifying and learning the generalizable features of the data in the source domain, such that these generalizable features can then be better identified in target domains. Specifically, this involves identifying and learning various representations and relationships in the labelled feature data of the source domain such that these generalizable features can be more accurately and easily identified in unseen and unlabeled target domains which share a common label space with the source domain. The improved identification of these generalized features leads directly to improved classification accuracy of features in the target domain.

It is desirable to improve the accuracy of point cloud classification.

### STATEMENTS OF INVENTION

According to an embodiment of a first aspect there is disclosed herein a computer-implemented method of performing point cloud classification comprising:

> selecting a point cloud for classification;
> obtaining a plurality of subsets of the selected point cloud associated with a plurality of parts of the selected point cloud;
> obtaining a graph structure representation of the subsets, the graph structure representation comprising nodes associated with each subset and one or more edges connecting the nodes;
> obtaining a graph structure embedding encapsulating structural relationships between the subsets, comprising inputting the graph structure representation into a graph encoder convolutional neural network;
> deriving a point cloud representation from the graph structure embedding; and
> classifying the point cloud representation, comprising inputting the point cloud representation into a classification encoder neural network to obtain a classification of the selected point cloud.

The point cloud representation may be the graph structure embedding.

The computer-implemented method may further comprising obtaining feature embeddings of the selected point cloud, comprising inputting the selected point cloud into a pre-trained feature encoder neural network.

The step of obtaining feature embeddings of the selected point cloud may be performed in parallel to the steps of obtaining a plurality of subsets, and/or obtaining a graph structure representation of the subsets, and/or obtaining a graph structure embedding, and/or deriving a point cloud representation.

The step of deriving a point cloud representation from the graph structure embedding may further comprise concatenating the graph structure embedding and the feature embedding to create the point cloud representation.

The pre-trained feature encoder neural network may be a shape encoder, and wherein the feature embeddings may be shape embeddings.

The shape feature encoder may be, or be part of, a part-based domain generalization network.

Obtaining a plurality of subsets of the selected point cloud associated with a plurality of parts of the selected point cloud may further comprise: inputting the selected point cloud into an unsupervised part decomposition module, the unsupervised part decomposition module performing unsupervised segmenting of the selected point cloud into the subsets.

The unsupervised part decomposition module may use a clustering algorithm to create candidate subsets.

The clustering algorithm may be spectral clustering.

The unsupervised part decomposition module may determine the subsets from the candidate subsets, the determination comprising identifying when the Shannon entropy of the candidate subsets is determined to be a minimum.

The number of subsets may be in the range 2 to 6.

The step of obtaining a graph structure representation of the point cloud subsets may further comprise: inputting the plurality of geometrically meaningful parts into a graph structure induction module, the graph structure induction module comprising a part feature encoder and a graph creation module;

the part feature encoder being a part feature encoder neural network, and generating the nodes as node representation embeddings of the subsets associated with the parts; and
the graph creation module generating the edges as edge representation embeddings of the subsets associated with the parts.

The part feature encoder neural network may perform farthest point sampling to breakdown the subsets into a finer-grained segmentation in order to generate the node representation embeddings.

The graph creation module may perform a Euclidean based graph creation method to determine the edge representation embeddings of the subsets associated with the parts. In particular, the graph creation module may create edge connections between the subsets associated with parts based on proximity. For instance, an edge connection may be determined if the Euclidean distance between subsets associated with the parts falls below a specified threshold t.

The graph encoder convolutional neural network may encapsulate the structural relationships between the subsets associated with the parts by extracting the information from the nodes and one or more edges connecting the nodes.

The graph encoder convolutional neural network may be bi-layered.

The classification encoder neural network may be a multi-layer perceptron.

The method of performing point cloud classification may be part of a training process for the point cloud classification model, the training process comprising:

wherein the step of selecting the point cloud for classification comprises selecting a point cloud from training data, the training data comprising a plurality of point clouds from a source domain, said point clouds having a known classification;
wherein, in the step of classifying the point cloud representation, the classification is a predicted classification of the selected point cloud; and

further comprising:

comparing the predicted classification and the known classification of the selected point cloud; and
adjusting, based on the comparison, at least one network weight of one of: the graph encoder convolutional neural network and the classification encoder neural network.

The step of comparing the predicted classification and the known classification comprises determining whether a classification loss is at a minimum.

The classification loss may be determined using a categorical cross-entropy loss function.

If the classification loss is determined to be at a minimum, the training process may be ended.

If the classification loss is determined not to be at a minimum, the method may further comprise iteratively performing the training process until the classification loss is determined to be at a minimum.

Wherein when the method includes the part feature encoder, the step of adjusting, based on the comparison, may further comprise adjusting at least one network weight of the part encoder.

The point cloud for classification may relate to point cloud data from a sensor, and the sensor may be used in an autonomous vehicle, a robot, or from an augmented reality device.

According to an embodiment of a second aspect there is disclosed herein a computer program which, when run on a computer, causes the computer to carry out a method comprising a process of point cloud classification comprising, the process comprising:

> selecting a point cloud for classification;
> obtaining a plurality of subsets of the selected point cloud associated with a plurality of parts of the selected point cloud;
> obtaining a graph structure representation of the subsets, the graph structure representation comprising nodes associated with each subset and one or more edges connecting the nodes;
> obtaining a graph structure embedding encapsulating structural relationships between the subsets, comprising inputting the graph structure representation into a graph encoder convolutional neural network;
> deriving a point cloud representation from the graph structure embedding; and
> classifying the point cloud representation, comprising inputting the point cloud representation into a classification encoder neural network to obtain a classification of the selected point cloud.

According to an embodiment of a third aspect there is disclosed herein an information processing apparatus comprising a memory and a processor connected to the memory, wherein the processor is configured to perform a method comprising point cloud classification, the process comprising:

> selecting a point cloud for classification;
> obtaining a plurality of subsets of the selected point cloud associated with a plurality of parts of the selected point cloud;
> obtaining a graph structure representation of the subsets, the graph structure representation comprising nodes associated with each subset and one or more edges connecting the nodes;
> obtaining a graph structure embedding encapsulating structural relationships between the subsets, comprising inputting the graph structure representation into a graph encoder convolutional neural network;
> deriving a point cloud representation from the graph structure embedding; and
> classifying the point cloud representation, comprising inputting the point cloud representation into a classification encoder neural network to obtain a classification of the selected point cloud.

According to an embodiment of a fourth aspect there is disclosed herein a computer-implemented method of training a point cloud classification model, the method comprising:

> selecting a point cloud for classification, comprising selecting a point cloud from training data, the training data comprising a plurality of point clouds from a source domain, said point clouds having a known classification;;
> obtaining a plurality of subsets of the selected point cloud associated with a plurality of parts of the selected point cloud;
> obtaining a graph structure representation of the subsets, the graph structure representation comprising nodes associated with each subset and one or more edges connecting the nodes;
> obtaining a graph structure embedding encapsulating structural relationships between the subsets, comprising inputting the graph structure representation into a graph encoder convolutional neural network;
> deriving a point cloud representation from the graph structure embedding;
> classifying the point cloud representation, comprising inputting the point cloud representation into a classification encoder neural network to obtain a predicted classification of the selected point cloud;
> comparing the predicted classification and the known classification of the selected point cloud; and
> adjusting, based on the comparison, at least one network weight of one of: the graph encoder convolutional neural network and the classification encoder neural network.

According to an embodiment of a fifth aspect there is disclosed herein a computer program which, when run on a computer, causes the computer to carry out a method comprising training a point cloud classification model, the method comprising:

> selecting a point cloud for classification, comprising selecting a point cloud from training data, the training data comprising a plurality of point clouds from a source domain, said point clouds having a known classification;;
> obtaining a plurality of subsets of the selected point cloud associated with a plurality of parts of the selected point cloud;
> obtaining a graph structure representation of the subsets, the graph structure representation comprising nodes associated with each subset and one or more edges connecting the nodes;
> obtaining a graph structure embedding encapsulating structural relationships between the subsets, comprising inputting the graph structure representation into a graph encoder convolutional neural network;
> deriving a point cloud representation from the graph structure embedding;
> classifying the point cloud representation, comprising inputting the point cloud representation into a classification encoder neural network to obtain a predicted classification of the selected point cloud;

comparing the predicted classification and the known classification of the selected point cloud; and
adjusting, based on the comparison, at least one network weight of one of: the graph encoder convolutional neural network and the classification encoder neural network.

According to an embodiment of a sixth aspect there is disclosed herein an information processing apparatus comprising a memory and a processor connected to the memory, wherein the processor is configured to perform a method comprising training a point cloud classification model, the method comprising:

selecting a point cloud for classification, comprising selecting a point cloud from training data, the training data comprising a plurality of point clouds from a source domain, said point clouds having a known classification;;
obtaining a plurality of subsets of the selected point cloud associated with a plurality of parts of the selected point cloud;
obtaining a graph structure representation of the subsets, the graph structure representation comprising nodes associated with each subset and one or more edges connecting the nodes;
obtaining a graph structure embedding encapsulating structural relationships between the subsets, comprising inputting the graph structure representation into a graph encoder convolutional neural network;
deriving a point cloud representation from the graph structure embedding;
classifying the point cloud representation, comprising inputting the point cloud representation into a classification encoder neural network to obtain a predicted classification of the selected point cloud;
comparing the predicted classification and the known classification of the selected point cloud; and
adjusting, based on the comparison, at least one network weight of one of: the graph encoder convolutional neural network and the classification encoder neural network.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BFRIEF DESCRIPTION OF THE DRAWINGS

Reference will now be made, by way of example, to the accompanying drawings, in which:

Figure 1 is a diagram illustrating a comparative method;
Figure 2 is a diagram illustrating a comparative method;
Figure 3 is a diagram illustrating a comparative method;
Figure 4 is a diagram illustrating a comparative method;
Figure 5 is a diagram illustrating a process;
Figure 6 is a diagram illustrating a method;
Figure 7 is a diagram illustrating a process;
Figure 8 is a diagram illustrating a process;
Figure 9 is a diagram illustrating a process;
Figure 10 is a diagram illustrating a training process;
Figure 11 is a diagram illustrating a method;
Figure 12 is a diagram useful for understanding embodiments;
Figure 13 is a table of results;
Figure 14 is a table of results;

Figure 15 is a diagram illustrating an apparatus.

## DETAILED DESCRIPTION

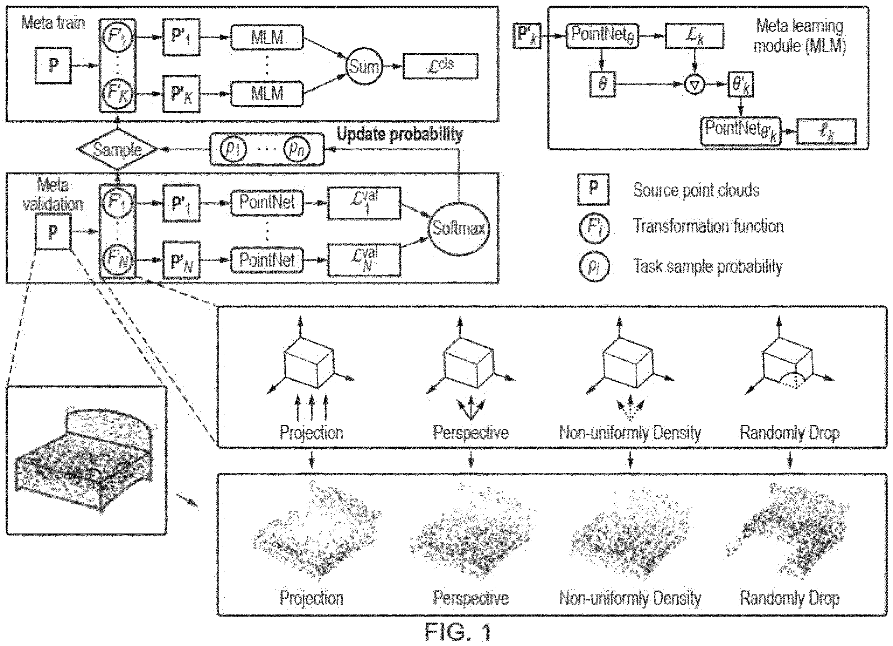

Figure 1 is a diagram illustrating a first comparative method (comparative method 1). Comparative method 1 may be referred to as MetaSets ( Huang et al., 2022, 'MetaSets: Meta-Learning on Point Sets for Generalizable Representations'). Comparative method 1 is a method for a classifying point clouds, and aims to learn generalizable representations that can transfer well across different points sets. In particular, it is concerned with 3D domain generalization (3DDG), which is a machine learning technique that aims to improve the performance of a model trained on a labelled 3D point cloud source domain, when performing classification on one or multiple different, unlabeled, unseen 3D point cloud target domain(s) by learning the generalized features. 3DDG helps to transfer models trained using synthetic data to various real-world scenarios (sim-to-real) in applications like autonomous driving, advanced driver assisted systems (ADAS) etc. To attempt to achieve this form of unsupervised domain generalization on point clouds, comparative method 1 subjects the point sets in a particular source domain to a number of different data transformations/augmentations that each have different geometry priors, and attempts to meta-learn point cloud representations from classification tasks performed on this group of carefully-designed different transformed point sets containing specific geometry priors. Figure 1 shows the framework of the meta-learning approach, including specific meta-tasks in the framework with examples of the different data transformations/augmentations used as input are random dropping, non-uniform density, perspective, projection etc. By performing the large number of different data transformations/augmentations each having different geometry priors, comparative method 1 aims to provide a MetaSet which can induce a larger set of geometry priors which have a higher chance of including geometry priors that are similar to those from the unseen target domain. Hence in this way it aims to provide a classification method capable of improved domain generalization. However, a failing of this approach is that in each case it takes the complete point cloud as a single monolithic entity for processing, and in doing so neglects the intricate complexities and nuances inherent within objects, and neglects the inherent geometric structure of an object that persists irrespective of the domain. Hence it is desirable to improve the classification accuracy of comparative method 1.

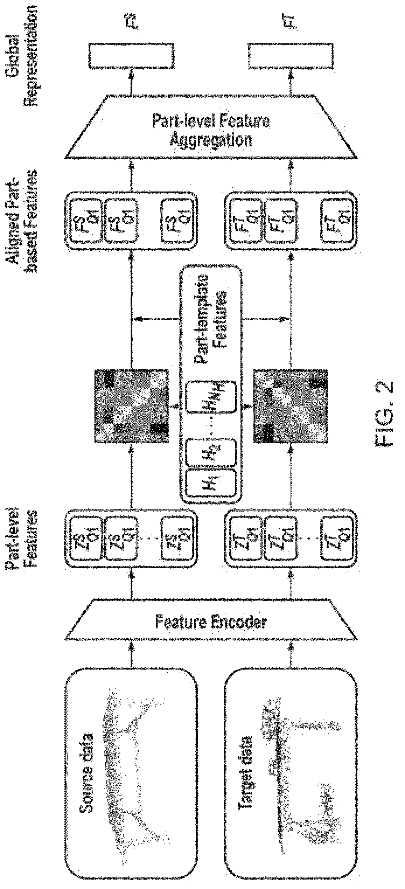

Figure 2 illustrates a second comparative method (comparative method 2). Comparative method 2 may be referred to as Part-Based Feature Representation (Wei et al., 2022, 'Learning Generalizable Part-based Feature Representation for 3D Point Cloud'). Comparative method 2 aims to provide unsupervised domain generalization of point cloud object classification. It aims to do this by providing a generalizable part-based feature representation and using a part-based domain generalization network (PDG). However, to do this the method requires building a part-template feature space shared by source and target domains, where as shown in Figure 2 shapes from distinct domains are first organized to part-level features and then represented by part-template features. These transformed part-level features, dubbed aligned part-based representations, are then aggregated by a part-based feature aggregation module. As shown in Figure 2, given a point cloud from source or target domain, it is first processed by a feature encoder and organized to part-level features. Then the part-level features are transformed to aligned part-based features by aligning them to part-template features. Then the aligned part-based features are aggregated to a global representation by part-based feature aggregation module. A problem with this method is that, although it does discuss using part level features while training, these part level features are obtained by doing Farthest Point Sampling (FPS), in particular to sample M centre points for constructing $M$ parts. However FPS is essentially random and hence doesn't ensure that the identified parts are meaningful. Further, in contrast to aspects of the present implementation, comparative method 2 does not consider that the relationships between the parts could be valuable, and hence doesn't consider learning the relationship between the parts. On the other hand, we propose to identify parts of a point cloud, in particular meaningful parts, and their relationships for learning domain invariant features.

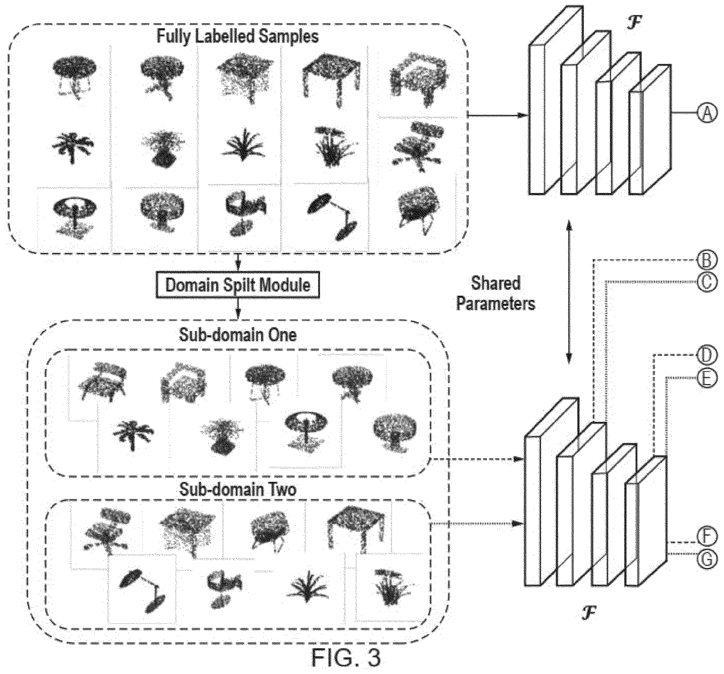

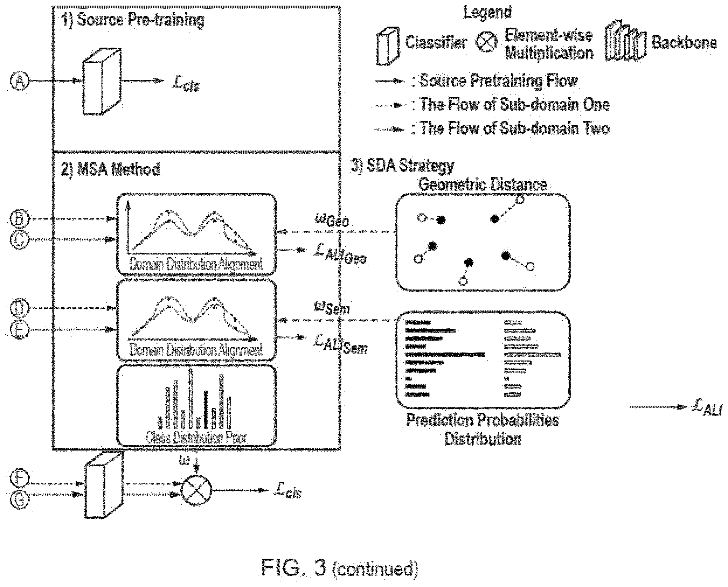

Figure 3 illustrates a third comparative method (comparative method 3). Comparative method 3 may be referred to as SUG (Huang et al., 2023, 'SUG: Single-dataset Unified Generalization for 3D Point Cloud Classification'). Comparative method 3 aims to provide for unsupervised domain generalization of object point cloud classification. To do this it proposes a Single-dataset Unified Generalization (SUG) framework that only leverages a single source dataset to alleviate the unforeseen domain differences faced by a trained source model. In particular, it proposes to design a Multi-grained Sub-domain Alignment (MSA) method, which can constrain the learned representations to be domain-agnostic and discriminative, by performing a multi-grained feature alignment process between the split subdomains from the single source dataset. Then, a Sample level Domain-aware Attention (SDA) strategy is presented, which can selectively enhance adaptable samples from different sub-domains according to the sample-level interdomain distance in an attempt to avoid the negative transfer. Figure 3 shows the SUG framework, consisting of the Multi-grained Sub-domain Alignment (MSA) and the Sample-level Domain-aware Attention (SDA) to attempt to address the one-to-many domain generalization problem. However, a problem with comparative method 3 is that it shares the combined failings of comparative methods 1 and 2. In particular, it takes the complete point cloud as a single monolithic entity for processing, and in doing so neglects the intricate complexities and nuances inherent within objects, and neglects the inherent geometric structure of an object that persists irrespective of the domain. For the same reason, it does not consider breaking the objects into parts, let alone meaningful parts, let alone that the relationships between the parts could be valuable, and hence doesn't consider learning the relationship between the parts. Hence it is desirable to improve the accuracy of comparative method 3.

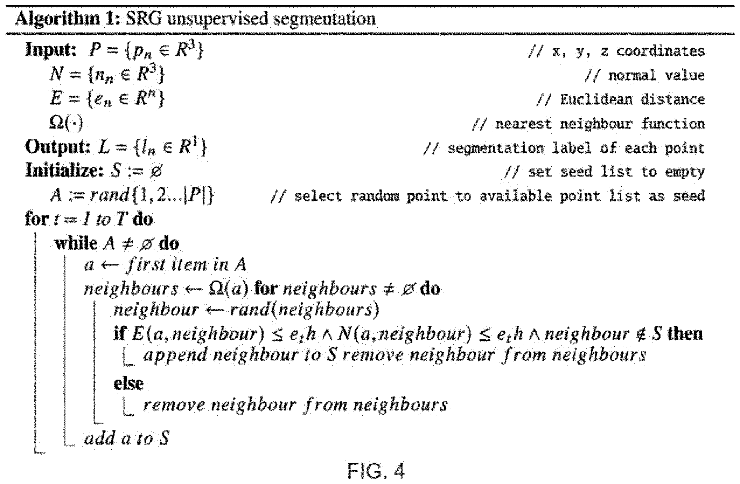

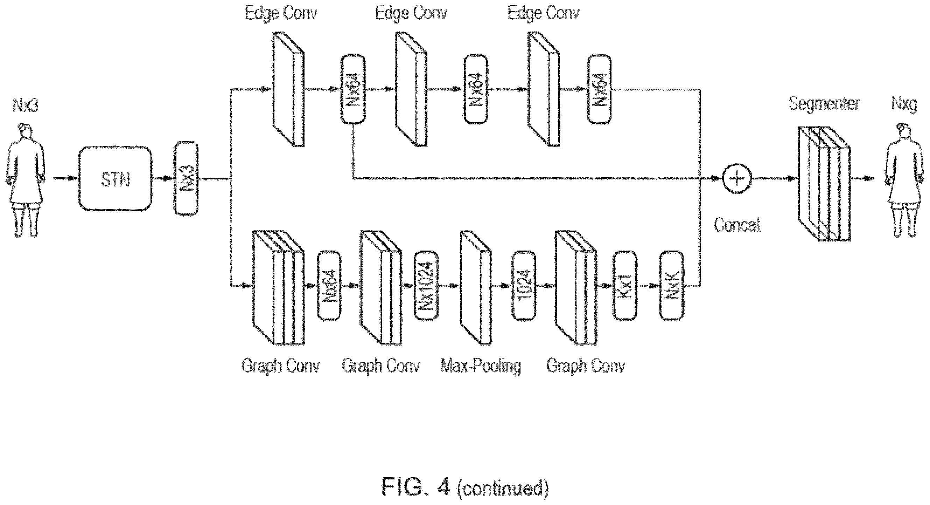

Figure 4 is a diagram illustrating a fourth comparative method (comparative method 4). Comparative method 4 may be referred to as SRG-Net (Hu et al., 2022, 'Unsupervised Segmentation for Terracotta Warrior Point Cloud (SRG-Net)'). Comparative model 4 aims to automatically segment 3D point cloud data, in particular of the Chinese terracotta warriors, and store the fragment data in the database to assist the archaeologists in matching the actual fragments with the ones in the database. To attempt to achieve this it performs a number of high level stages of operation, which can be broken down into three broad stages: coarse segmentation of point cloud into clusters, refinement to further refine the clusters in an unsupervised way, and finally once this labelling is done it is trained in a supervised manner on soft labels. In particular, first it uses a Seed Region Growing (SRG) algorithm to coarsely label input point clouds with cluster labels. Then it uses an encoder-decoder, which is a three-staged architecture having 2 branches: an 'Edge-Conv' branch to generate dynamic graphs from KNN and a 'Graph-Conv' branch to create bottleneck. Next, a segmentor network is used on the concatenated three dynamic graphs and bottleneck and predicts class labels for each point on the point cloud. Then a subsequent refinement strategy is used to attempt to achieve better cluster label assignment for each point in the point cloud. Finally, a supervised training stage is used, whereby once the predicted labels are assigned in an unsupervised manner, the entire network is trained in a supervised manner on the predicted labels to obtain final segmentation results. Hence, comparative method 4 at first encodes the input point cloud using a STN (transformer based model) and passes it to Dynamic Graph convolutional neural networks (DGCNN) encoder. The encoder creates dynamic graphs by using K-nearest neighbor algorithms (KNNs) at different stages of the process. Hence a problem with this approach is that all the graphs are created on embeddings and not on meaningful parts of the input point cloud. Indeed, instead t directly feeds the entire monolithic point cloud into a multi-layered GCN based network to learn some graph representations without enforcing geometry preserving structures. Hence comparative method 4 neglects the intricate complexities and nuances inherent within objects, and neglects the inherent geometric structure of an object that persists irrespective of the domain. For the same reason, it does not consider breaking the objects into parts, let alone meaningful parts, let alone that the relationships between the parts could be valuable, and hence doesn't consider learning the relationship between the parts. Further, comparative method 4 uses a supervised approach, which disadvantageously requires annotated and pseudo-annotated data for classification to be performed. In other words, it requires a ground truth, as predicted labels are used as soft labels for supervised training of the segmentor, and ground truth labels are used for loss calculation. Hence it is desirable to improve the accuracy of comparative method 4.

Aspects of the present application aim to address these failings in state of the art point cloud classification.

One of the aims of aspects of the present application is to determine a manner of segmenting the input point cloud which provides a subset collection of parts of the input point cloud which could be considered meaningful, rather than random. In other words, aspects of the present application seek to identify, and break the input point cloud into parts which may for instance be considered to represent some fundamental or consistent aspect of the object which the point cloud data depicts, such that the parts are on average or substantially present in all objects of that classification, and are therefore for instance useful for classifying objects in point clouds.

One aspect of what would be considered meaningful parts would for instance be parts that would be recognizable by a human as semantically meaningful, i.e. in the example of a chair one of the ways a human would identify and understand this concept is as a compound structural concept which is formed from, for instance, the entailed concepts of legs, a seat back, and a seat etc., where these concepts are arranged in a particular relation. Here the concepts of leg, seat back and seat etc. are semantically meaningful parts. Another aspect of what would be considered meaningful is geometrically meaningful parts in that they represent or relate to properties considered to define the inherent geometric structure of a particular object. Of course, semantically meaningful parts and geometrically meaningful parts are not mutually exclusive, they may be identical in certain circumstance, share overlap, or be entirely separate.

Put another way, it was noted that inaccuracies and failures of the state-of-the-art point cloud classification methods are in part because they either did not break objects down into parts at all, instead treating the point cloud monolithically when processing, or alternatively they broke the point cloud into random parts, such as with Farthest Point Sampling. However, breaking the point cloud down randomly is only useful for reducing the processing burden of the point cloud classification, and does little to improve the accuracy of the classification itself. Hence to improve accuracy of classification, aspects of the present application determined that it would be desirable to be able to identity and determine parts of objects which are useful for identifying those obj ects, for instance by being parts which are on average or substantially present and in a particular relation in all objects of a particular classification, for instance by determining parts which are geometrically meaningful in that they are parts which are considered to represent, relate to and/or define parts of the inherent geometric structure of a particular object that persists irrespective of the domain.

In particular, as previously described, real-world objects are frequently constituted of more than one identifiable part, where each part may relate to a concept intrinsic to all or most objects of that same classification. For instance, in the example of a chair as described above, one of the ways a human would understand this is as a compound structural concept which is formed from for instance the entailed concepts of legs, a seat back, and a seat etc., where these concepts are arranged in a particular relation. Given that the classification concept of a chair is a human construct, all chairs will share at least most of these features in mostly the same relation. Hence in a high-level manner, one way in which a human identifies chairs is by determining the presence of the concepts that constitute a chair, and determining them as being present in a particular relation to each other. This same principle applies to most objects in the 3D world, where they could be said to be constituted of identifiably particular parts in an identifiably particular relation.

Accordingly, one of the aims of aspects of the present application is to determine a manner of approximating and/or incorporating a procedure analogous to this in a point cloud classification model, by identifying so called 'meaningful' parts of a particular classification of object, where said features are therefore useful and can be used to accurately identify classifications of objects by determining the presence of these meaningful parts and their structural relation, and/or for instance will be on average or substantially invariant in their presence and structural relation across all objects in that classification regardless of domain. These meaningful parts may or may not correlate with or be those that a human would understand - such as legs and seat back for a chair - however it is the same principle which applies: aspects of the present application relate to a system which breaks down an object into a smaller constituent parts, determines their relation, and from this determines the classification of the object.

As will be described further later, a training process is first required in which a collection of parts considered and determined to be meaningful, and their structural relation, for objects of a particular classification can be learned from a labelled source domain, across different classifications, thereby allowing the system once trained to determine objects from target different domains sharing the classification of the source domain. Hence, aspects of the present application seek to determine parts in objects sharing a classification, where these parts may be considered meaningful in the sense that they are on average or substantially present in all point clouds of objects of a particular classification, and hence are useful and can be used to accurately identify classifications of objects by determining the presence of these meaningful parts and their structural relation. Aspects of the present application in particular identify parts which are geometrically meaningful for a particular object classification, in that they are determined to represent or relate to properties considered to define the inherent geometric structure of an particular object that persists irrespective of the domain.

According to certain implementations of the present application, it is possible to provide a point cloud classification model Capable of leveraging (fine-grained) meaningful part level information without incurring any additional annotation, rendering cost and/or requiring prior knowledge about the point cloud data.

According to certain implementations of the present application, it is possible to learn high quality representations of the input point cloud, by exploiting both unsupervised part decomposition and graph structure induction on the source point cloud.

According to certain implementations of the present application, there is provided improved classification accuracy of point cloud classification in the context of domain generalization on multiple unseen domains sharing common label space with source domain.

According to certain implementations of the present application, there is provided a point cloud classification model capable of learning local geometry preserving graph structure representations in and of the point clouds that are persistent across domains for a particular class, thereby allowing learning of better generalized representations.

According to certain implementations of the present application, there is provided an improved point cloud classification model capable of improved classification accuracy.

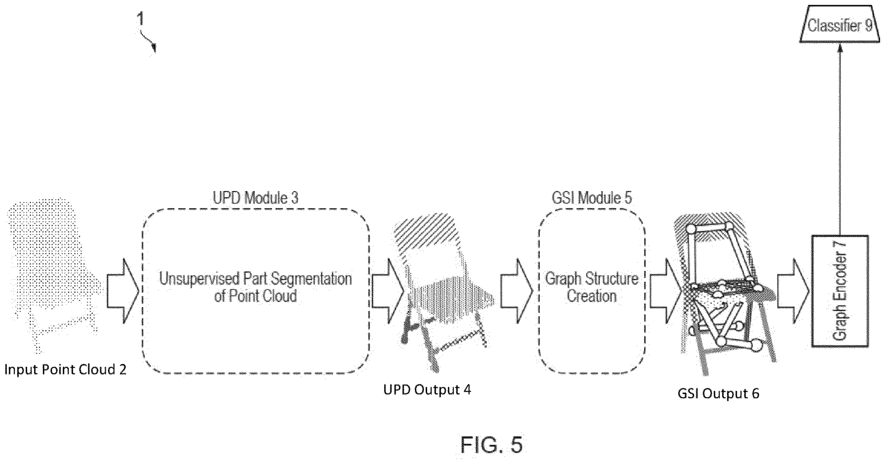

Figure 5 is a diagram illustrating a classification process according to a specific implementation. Figure 5 shows components of a point cloud classification model 1, configured to take an unlabeled point cloud as input and perform a classification of the point cloud, for instance to output a point cloud classification label and/or for instance identifying real world object(s) in the point cloud. The unlabeled point cloud data received is therefore in a target domain to be classified. The point cloud data may be received from for instance a sensor, for instance on an autonomous vehicle or robotic arm or augmented reality device.

The point cloud is augmented by the point cloud classification model in two ways. First it is broken down or segmented into subsets, each subset being a part of the original point cloud, or in other words a smaller point cloud formed from a part of the original point cloud. Second a graph structure is induced into the subsets associated with the parts to form a graph structure representation of the parts of the point cloud. The graph structure being formed of nodes into the parts and edges connecting the nodes. In other words, the graph structure represents the structural relations between the parts.

Following augmentation, the graph structure representation is passed through a machine learning encoder which obtains a graph structure embedding having extracted and encapsulated information defining the structural relationships between the parts based on the graph structure representation. The graph structure embedding forming a representation of the original point cloud. This point cloud representation is then classified by a machine learning classification model to output a classification label, for instance identifying real world obj ect(s) in the point cloud. The machine learning encoder such as the graph encoder comprises network weights, and can be trained as will be later described.

In the specific implementation of Figure 5, the breaking down of the input point cloud 2 into parts is performed by a Unsupervised Part Decomposition (UPD) Module 3 which performs unsupervised segmentation of the point cloud into parts, and specifically parts considered meaningful, for instance as broadly outlined above. The specific functioning of the UPD module 3 and the manner in which it determines the meaningful parts is described in further detail later.

As can be seen in Figure 5, an example input point cloud 2 is a provided which a human can discern as being a chair, however this depiction is simply for ease of visual understanding. The input point cloud 2 would be presented as conventional input data, and may form or represent any number of different real world objects belonging to any number of different domains. The implementations of the present disclosure apply equally to any domains and any point clouds which are input into it, providing the unseen target domains share labels and classifications with the source domain on which the system was trained. Throughout the present application, a point cloud representing a chair will be used as the example.

The output 5 of the UPD module 3 is the meaningful parts of the point cloud which the input point cloud 2 has been segmented into. For ease of visual understanding, the different parts which the UPD module 3 has determined to segment the input point cloud 2 into are shown as different hatched sections of the chair as shown in UPD Output 4 of Figures 5 to 9. However, this is merely a visual representation to aid understanding and is not limiting.

In the specific implementation of Figure 5, the inducing of the graph structure into the meaningful parts is performed by a Graph Structure Induction (GSI) Module 5, which for instance performs fine-grained graph structure creation by inducing nodes into the meaningful parts and connecting the nodes using edges. The specific functioning of the GSI module 5 and the manner in which it determines the nodes and edges is described in further detail later.

The output of the GSI module 5 is the graph structure representation of the meaningful parts, formed of nodes and edges. In particular, for ease of visual understanding the output of the GSI module 5 has been depicted visually as the segmented meaningful parts of the chair with the nodes embedded within it, and the edges connected, as shown in the GSI Output 6 of Figures 5 to 9. However, this is merely a visual representation to aid understanding and is not limiting.

The graph structure representation of the meaningful parts is then passed through a machine learning graph encoder 7, which in the specific implementation of Figure 5 may be a graph encoder convolutional neural network. The graph encoder 7 may be a graph encoder convolutional neural network (GCN). For instance, it may be any number of basic GCN layers stacked back-to-back together. There are multiple variants of basic GCN layers in the state of the art. For instance, any one or multiple of these GCN layers may be used in combination with one another. A specific example is provided in Kipf & Welling, 2017, 'Semi-Supervised Classification with Graph Convolutional Networks'.

The graph encoder 7 is configured to extract and encapsulate information defining the relationship between the parts as represented by graph structure representation, and to output a graph structure embedding accordingly. The graph structure embedding forming a representation of the original point cloud. The graph encoder 7 comprises network weights, and can be trained as will be later described.

The graph structure embedding forming a representation of the original point cloud is then inputted into a classifier 9 including machine learning classification model to output a classification label to perform classification. The machine learning classification model may be a classification encoder neural network, for instance a Multi-layer Perceptron (MLP) structure. The classifier 9 outputs a classification label, for instance identifying real world object(s) in the point cloud. The classifier 9 encoder comprises network weights, and can be trained as will be later described.

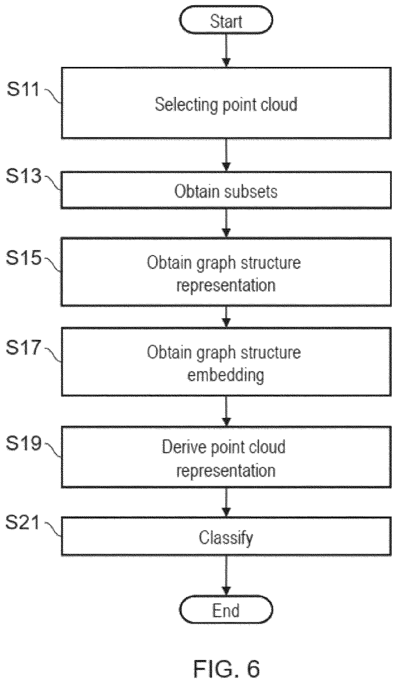

Figure 6 is a diagram illustrating a classification process according to an implementation.

Step S11 comprises selecting a point cloud for classification, where selecting can for instance mean merely choosing.

Step S13 comprises obtaining a plurality of subsets of the selected point cloud associated with a plurality of parts of the selected point cloud, where said parts may be considered meaningful, and may be considered geometrically meaningful.

Step S15 comprises obtaining a graph structure representation of the subsets, the graph structure representation comprising nodes associated with each subset and one or more edge connecting the nodes.

Step S17 comprises obtaining a graph structure embedding encapsulating structural relationships between the subsets, comprising inputting the graph structure representation into a graph encoder convolutional neural network.

Step S19 comprises deriving a point cloud representation from the graph structure embedding.

Step S21 comprises classifying the point cloud representation, comprising inputting the point cloud representation into a classification encoder neural network to obtain a classification of the selected point cloud.

Any of the steps may comprise processing described with reference to Figure 5. For example, the UPD module 3 may carry out the processing of step S13, and/or the GSI module 5 may carry out any of the processing of step S15, and/or the graph encoder 7 may carry out any of the processing of step S17, and/or the classifier 9 may carry out any of the processing of step S21.

Hence a classification approach may be employed as described above with reference to Figure 5.

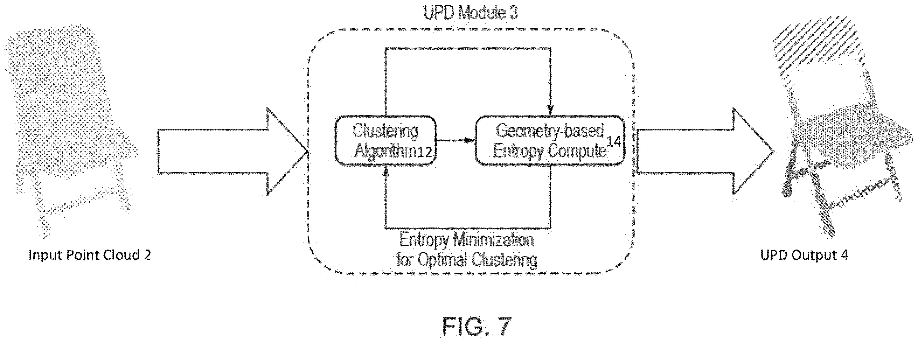

Figure 7 is a diagram illustrating a process according to an implementation which may be considered a more specific implementation of the process of the UPD module 3 as described in relation to Figure 5.

The UPD module 3 is configured to perform the breaking down or segmenting of the input point cloud 2 into parts, and particularly into parts considered meaningful as previously described, such as geometrically meaningful. In particular, one of the aspects of the present application which the inventors have contributed is the provision of a method for identifying and determining parts in a point cloud object which can be considered and determined to be meaningful, in the sense that they are useful and can be used to accurately identify classifications of objects by determining the presence of these meaningful parts and their structural relation in point cloud objects. A specific example of parts considered to be meaningful is the identification of parts considered to be geometrically meaningful in that they represent or relate to properties considered to define the inherent geometric structure of a particular object classification, regardless of and invariant across domains.

In the specific implementation of Figure 7, the UPD module 3 performs unsupervised part decomposition, which is a machine learning technique that segments point clouds into meaningful parts in an unsupervised way without any prior knowledge about the point cloud data. It has emerged as a powerful technique that enables a more fine-grained analysis of 3D data by dividing objects into semantically meaningful parts.

Conventional unsupervised part decomposition may use a clustering algorithm to determine the parts or segments, however it requires a user to predefine the number of parts or segments in advance. In implementations of the present application, the inventors have advantageously identified and contributed that the most effective hyperparameter value for this range of number of parts (k) is between 2 to 6. In other words, it was determined that constraining the range of number of parts (k), which is the number of clusters in a clustering algorithm, provided the most useful breakdown of parts which can then later be used to accurately classify point cloud objects. In other words, it was identified that the most useful range for the number of meaningful parts to look for and identify in a point cloud object was between 2 to 6.

Hence in operation the UPD module 3 will use a clustering algorithm 12 to output a subset of between 2 to 6 parts, which are smaller constituent parts of the original point cloud.

In specific implementations, it was determined that spectral clustering is the most effective, efficient and useful clustering algorithm to use. An example of spectral clustering can be found in: von Luxburg, 2007, 'A Tutorial on Spectral Clustering', Statistics and Computing, 17 (4), 2007. However, it is noted that other clustering algorithms may also be applied, for instance BIRCH clustering.

However, within this range of parts it is advantageous to determine the value for the optimal number of parts. To achieve this determination the inventors of the present application have advantageously implemented a modified weighted version of Shannon Entropy. A comparative method may be found in: Weinmann et al., 2015, 'Semantic Point cloud interpretation based on optimal neighborhoods, relevant features and efficient classifiers', ISPRS Journal of Photogrammetry and Remote Sensing.

In particular, as shown in Figure 7, the UPD module 3 uses the clustering algorithm 12 followed by the geometry-based entropy compute 14, which feeds back into the clustering algorithm 12 to segment the input point cloud 2 in an unsupervised manner. It is noted that there is no training of this module.

In a specific implementation, the UPD module 3 uses spectral clustering followed by Entropy Minimization to segment the parts of point clouds in an unsupervised manner. In particular, the problem of optimal meaningful clustering of the input point cloud 2 is modelled as a discrete optimisation problem using the metric of entropy. Again, it is noted that any clustering algorithm may be used, but in a specific advantageous implementation spectral clustering is used as it was found to give the best results.

In particular, the use of modified weighted Shannon Entropy is based in part geometries to determine the optimal number of clusters, which are the subsets associated with parts which the point cloud is broken down or segmented into. This geometry-based approach evaluates the informativeness of a segmented cluster, assessing its potential for further subdivision.

First, the point cloud is broken down or segmented into k distinct parts, each representing a candidate subset which may be determined to be a subset. Subsequently, for every individual part, its geometric center is calculated, where n is the number of points in each part. Then, the 3D covariance matrix S for each part is computed. Next, the eigen values of the 3D covariance matrix are calculated:

$$\bar{X} = \frac{1}{n}\sum_{i=1}^{n} X_i$$

and

$$S = \frac{1}{n}\sum_{i=1}^{n}(X_i - \bar{X})(X_i - \bar{X})^T$$

These eigenvalues are used for defining the local 3D structure. More precisely, dimensions such as linearity $L_\lambda$,

planarity $P_\lambda$, and scattering $S_\lambda$ can be construed by using these eigenvalues.

The dimensionality features, namely $L_\lambda$, $P_\lambda$, $S_\lambda$ E [0, 1] represent 1D, 2D, and 3D characteristics:

$$L_\lambda = \frac{\lambda_1 - \lambda_2}{\lambda_1}$$

$$P_\lambda = \frac{\lambda_2 - \lambda_3}{\lambda_1}$$

$$S_\lambda = \frac{\lambda_3}{\lambda_1}$$

$$\lambda_1 \geq \lambda_2 \geq \lambda_3 \geq 0$$

Finally, determining appropriate neighborhood size can be framed as how to prioritize one of these three geometric features. This prioritization aligns with the intention to minimize unpredictability, quantified by the weighted Shannon entropy measure (Ei), where $w_j$ is the number of points of the candidate subset associated with a part:

$$E_i = -w_i * (L_\lambda \ln(L_\lambda) + P_\lambda \ln(P_\lambda) + S_\lambda \ln(S_\lambda))$$

Hence when the weighted Shannon entropy ($\mathbf{E}_i$) is determined to be a minimum, it is determined that the optimal number of parts k has been arrived at and the input point cloud 2 is thereby broken down into k subsets each associated with a determined part of the point cloud. Each part is thereby identified as being for instance meaningful, for instance in particular geometrically meaningful.

Hence, in one aspect the above method uses weighted Shannon entropy with geometry preserving features linearity, planarity and scattering defined by principal eigen-values, and that these are used to identify and determine the parts and the number of parts which we may considered meaningful, for instance geometrically meaningful in a particular input point cloud 2.

In light of the above, put another way, an alternative algorithmic presentation of the functioning of the UP module 3 may be presented as:

Input: Point Cloud **P** [N X 3] (i.e. a Point-cloud with N 3D Coordinate-Points)

For **k**: = 2 to 6 do:

**Parts** := **Cluster_Algorithm(P, k)** and **E$_k$** := 0

**For P$_i$ := Parts[0]** to **Parts[k]** do:

Calculate Covariance-Matrix of **P$_i$**:

$$\bar{X} = \frac{1}{n}\sum_{i=1}^{n} X_i$$

and

$$S = \frac{1}{n}\sum_{i=1}^{n} (X_i - \bar{X})(X_i - \bar{X})^T$$

Calculate **Eigen-Values** of $S$

Define geometric characteristics:

Linearity $L_\lambda$, Planarity $P_\lambda$, and Scattering $S_\lambda$:

$$L_\lambda = \frac{\lambda_1 - \lambda_2}{\lambda_1}$$

$$P_\lambda = \frac{\lambda_2 - \lambda_3}{\lambda_1}$$

$$S_\lambda = \frac{\lambda_3}{\lambda_1}$$

$$\lambda_1 \geq \lambda_2 \geq \lambda_3 \geq 0$$

Calculate Weighted-Entropy $E_i$ for parts $P_i$:

$$E_i = -w_i * (L_\lambda \ln(L_\lambda) + P_\lambda \ln(P_\lambda) + S_\lambda \ln(S_\lambda))$$

Calculate the number of points in the part point cloud:

Weight $w_i = \mathbf{Card(P_i)}$

Calculate the entropy of the **k**-th cluster, the summation of all part entropies ($E_i$), by iteratively summing them up for the kth cluster scheme (which will have exactly $\mathbf{k*E_i}$ terms corresponding to **k** parts):

Entropy for **k**-th Cluster-scheme, $E_k := E_k + E_i$

Finally, when all $E_k$ are calculated for k=2 to 6, find the **k** for which $E_k$ is lowest and that will be optimal number of clusters:

**Return $k_{optimal} = ArgMin(E_k)$**

For completeness and ease of reference, a list of the variables as outlined in all preceding equations is provided here:

$X_i$= 3D coordinate (x,y,z) for each point in the point cloud

$\overline{X}$= centroid of the point cloud

S = the covariance matrix of Part $\mathbf{P_i}$ which is the i-th part (generic notion)

$\lambda_1$, $\lambda_2$, $\lambda_3$ = eigen values of covariance matrix

$E_i$= entropy of i-th Part $\mathbf{(P_i)}$ of the point cloud

Wi = number of points in the i-th part $\mathbf{(P_i)}$. It is also represented by $\mathbf{Card(P_i)}$, which is the cardinality of Part $\mathbf{P_i}$

$\mathbf{E_k}$ = total entropy of all **k** parts for a particular cluster scheme (**k** =2 to 6)

$\mathbf{k_{optimal}}$ = Optimal number of $\mathbf{k}$

**ArgMin** (f(x)) = the argument x which minimizes f(x)

Hence in a specific implementation, the UPD module 3 uses modified spectral clustering for point cloud segmentation, and distinctively uses a modified weighted variant of Shannon entropy to advantageously optimize this segmentation, thereby addressing the pivotal challenge of determining the optimal number of parts in a point cloud without any prior knowledge.

Accordingly, the UPD module 3 advantageously automatically and in an unsupervised manner obtains a plurality of subsets of the input point cloud 2, each subset associated with an identified part of the input point cloud 2. These subsets and associated parts may be considered meaningful, as previously described. For instance a specific example of parts considered to be meaningful is the identification of parts considered to be geometrically meaningful in that they represent or relate to properties considered to define the inherent geometric structure of a particular object classification, regardless of and invariant across domains. Regardless, the subsets and associated parts created by the implementations of the present application have been determined to be advantageously useful for improving the accuracy of identify classifications of objects.

Hence, according to certain implementations of the present application, there is provided a single step unsupervised clustering algorithm that automatically divides the entire input point cloud 2 into multiple clusters without needing any additional process, where these clusters may be considered meaningful as previously described. Further, advantageously the process is entirely unsupervised and does not require any ground truth for comparison, as in state of the art classification processes.

Hence, the UPD module 3 provides the subsets of the point cloud, from which the structural relationship between these subsets will be learned and used for classification of the point cloud in other aspects of the present application.

The training of the UPD module 3 will be described later.

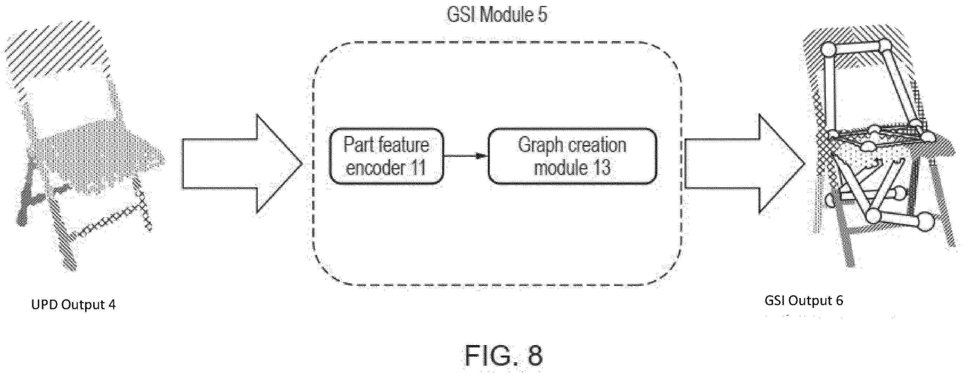

Figure 8 is a diagram illustrating a process according to an implementation which may be considered a more specific implementation of the process of the GSI module 5 as described in relation to Figure 5.

In one aspect, the GSI module 5 of a particular implementation is configured to receive the plurality of subsets of the input point cloud 2 associated with a plurality of parts of the input point cloud 2, and to obtain a graph structure representation of the subsets, the graph structure representation comprising nodes associated with each subset and one or more edge connecting the nodes. Hence, in other words it induces a graph structure into the subsets associated with the parts.

In a specific implementation, the GSI module 5 comprises a part feature encoder 11 and a graph creation module 13, which can be arranged to process either in series or in parallel, as both take as input at least the plurality of subsets of the input point cloud 2 each associated with a part of the input point cloud 2. In a preferred specific implementation, as outlined in the Figure 8 representation, the processing is arranged in series where the part feature encoder 11 first performs its functionality before outputting to the graph creation module 13 to subsequently perform its functionality.

The part feature encoder 11, which may for instance be a part feature encoder neural network, generates node representation embeddings of the subsets associated with the parts. The graph creation module 13 generates edge representation embeddings of the subsets associated with the parts. The part feature encoder 11 comprises network weights, and can be trained as will be later described.

In a specific implementation, the part feature encoder 11 even further breaks down or segments the subsets associated with the parts received from the UPD module 3. In particular, it may perform a finer-grained decomposition into even smaller parts, and may for instance use a Farthest Point Sampling (FPS) method to achieve this. Hence the part feature encoder 11 may perform fine grained part creation. In a specific implementation, the part feature encoder 11 may take the form of a point cloud encoder, such as PointNet, PointNet++ or DGCNN.

Regardless of the specific manner of operation, the part feature encoder 11 thereby creates a node representation embedding of the subsets associated with the parts. The node embeddings may be the same number as the number of subsets associated with the parts, and may for instance be one in per subset, and further may for instance be in the center of each subset. Alternatively there may be more or fewer node embeddings than subsets. Other manners of deriving the nodes are envisioned, and may relate to state of the art node creation methods. The training of the part feature encoder 11 will be described later.

In a specific implementation, the graph creation module 13 may perform a Euclidean based graph creation method to determine the edge representation embeddings of the subsets associated with the parts. In particular, the graph creation module 13 may create edge connections between the extracted subsets associated with parts based on proximity. For instance, an edge may be determined if the Euclidean distance between subsets associated with the parts falls below a specified threshold t. In other words, distance metrics are used, specifically Euclidean distance, between clusters forming subsets and thresholding is done to form edges between the subsets associated with the parts, which advantageously assists in creating geometrically meaningful graph structure representations. In implementations of the present application, t is a hyperparameter which has been determined and fixed as a result of extensive experimentation of the inventors.

Regardless of the specific manner of operation, the graph creation module 13 thereby creates a graph representation embedding of the subsets associated with the parts. Other manners of deriving and connecting the edges are envisioned, and may relate to state of the art edge creation methods.

The functioning of the GSI module 5 to perform graph structure induction as outlined in the present application is a novel application in the field of point clouds, and provides distinct advantages in accuracy and efficiency of graphical representation of point clouds, in particular in determining their structure, such as the intrinsic geometric structure of the subsets associated with the parts of the input point cloud 2.

Accordingly, the GSI module 5 outputs a graph structure representation of the subsets, comprising a node representation embedding and a graph representation embedding. This graph structure representation can be said to encapsulate and represent the structural relationship between the subsets associated with the parts. This graph structure representation aims to capture the underlying geometrical and structural relationship of the previously determined subsets, and facilitates the later determination and identification of a graph structure embedding which may be considered to be used to accurately classify the object in the point cloud.

Hence according to implementation of the present application, it is possible to construct geometrically meaningful graph structure representations by forming edges between meaningfully segmented point cloud subsets associated with parts. These graph structure representations may be considered geometry-preserving graphs as templates for classifying objects of that classification in point clouds from unseen domains.

With reference to Figure 5, the output of the GSI module 5, the graph structure representation comprising nodes associated with each subset and one or more edge connecting the nodes, is then passed to the graph encoder 7. As previously described, in the specific implementation of Figure 5 the graph encoder 7 may be a graph encoder neural network, and may for instance be a graph encoder convolutional neural network (GCN), and for instance may be a bi-layered GCN.

The graph encoder 7 is configured to extract and encapsulate information defining the relationship between the parts as represented by graph structure representation, and to output a graph structure embedding accordingly. The graph structure embedding forming a representation of the original point cloud.

In other words, the graph encoder is used to understand, encapsulate and encode/embed the structural relationships in the graph structure representation of the point cloud. Accordingly, in other words, the output of the graph encoder 7 may be considered to be a graph structure embedding which contains information about the subsets of parts, for instance determined to be meaningful parts such as geometrically meaningful parts, and which contains information about the structural relationships of those parts.

Hence, with reference to some of the aims of the present application as previously discussed, in prosaic terms the graph structure embeddings output of the graph encoder 7 may be considered to contain information which identifies a number of parts of the point cloud (represented by the subsets), such as parts determined to be meaningful, for instance geometrically meaningful, and identifies the structural relationship of these parts. Accordingly, this information can be used to identify, by classification, the object of the point cloud as these parts in a particular structural relation may be considered to be shared by a majority or most or all objects of that particular classification - or simply a sufficient proportion to be useful for accurate classification - and hence their determination may be used to identify the classification of the object in the point cloud.

In other words, it may be said that at this stage the system has extracted and encapsulated the information required from the point cloud to classify the object it depicts, where in implementation of the present application this information is considered to be the identification of parts, in particular meaningful parts, of the object in the point cloud and the identification of the relationship between these parts.

It is noted that the graph encoder 7 is depicted in the specific implementation as being separate from the GSI Module 5, and it may not be part of the GSI module 5, however in some specific implementations it may be considered part of the GSI module 5.

The graph structure embedding output from the graph encoder 7 is input into the classifier 9 for classification of the object in the point cloud. The graph structure embedding may be considered to be a point cloud representation, for instance in that the node embeddings and edge embeddings and their structural relationships contained within it, which relate to the subsets associated with the (meaningful) parts, may be considered to represent the original point cloud input into the system.

For instance, representing information about the intrinsic geometric structure of the object of the point cloud.

As previously described, the classifier 9 may be a machine learning classification model configured to output a classification label to perform classification. The machine learning classification model may be a classification encoder neural network, for instance a Multi-layer Perceptron (MLP) structure. The classifier 9 outputs a classification label, for instance identifying real world object(s) in the point cloud. The classifier 9 encoder comprises network weights, and can be trained as will be later described.

The combined function of the UPD module 3, the GSI Module 5, the graph encoder 7 and the classifier 9 as described in aspects of the implementation of present application were determined to be particularly advantageous in providing accurate point cloud classification.

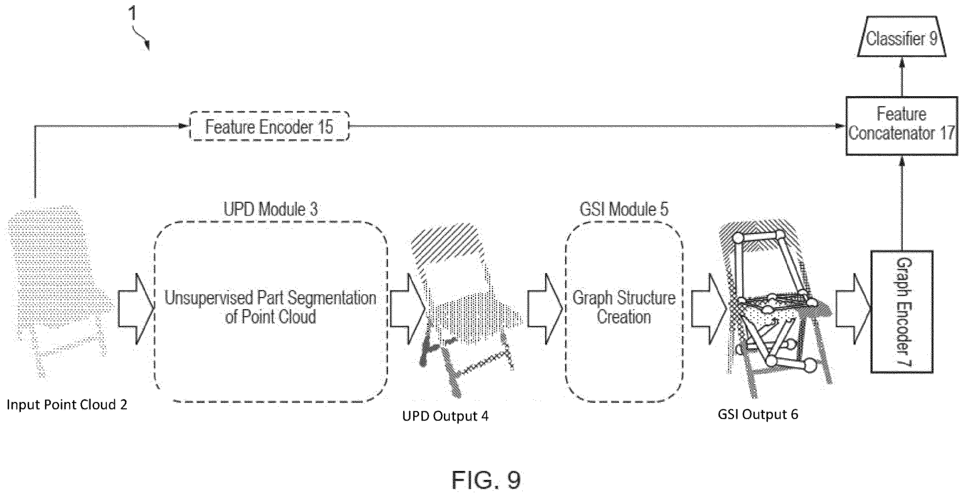

Figure 9 is a diagram illustrating a classification process according to an implementation which may be considered a more specific implementation of the Figure 5 classification process. The features of any of Figures 5 to 8 may also be included in here.

In particular, as compared to the process as described with reference to Figure 5, the specific implementation of Figure 9 additionally includes a feature encoder 15 and a feature concatenator 17.

In particular, the functioning of the classification process as previously described with reference to Figures 5, 6, 7 and 8 may be included here, and hence duplicate description will be avoided. Hence the functioning of Figure 9 may be identical to that as described with reference to previous Figures 5, 6, 7 and 8 with the exception of the following additional optional features.

In particular, the input point cloud 2 which is input into the UPD module 3 - and subsequently processed by the GSI module 5 and graph encoder 7 as previously described - may in parallel and/or separately be passed through a different feature encoder 15. The feature encoder 15 is an encoder which performs a different form of feature augmentation, extraction or encoding on the input point cloud 2 as compared to the functioning of the UPD module 3 and the GSI module 5 as previously described. In the first instance, the precise manner of feature encoding performed is not critical, as the purpose of the parallel processing through the feature encoder 15 is to provide an additional breakdown of the input point cloud 2, for instance in a different manner or from a different process perspective, as compared to the functioning of the UPD module 3 and GSI module 5.

In particular, this is advantageous because all processing of the input point cloud 2 in order to perform classification necessarily loses or reduces the amount of information in the original point cloud. Hence, whilst the advantageous functioning of the UPD module 3, GSI module 5 and graph encoder 7 in aspects of the implementation of the present application combine to facilitate the creation of the point cloud representation which is able to allow to for highly accurate classification, it is nevertheless the case that the point cloud representation created for classification is still of reduced information as compared to the input point cloud 2. Indeed, this is the entire purpose of a representation, and all point cloud classification models process input point clouds in a manner that reduces the amount of information. Hence it is advantageous for even further improved classification accuracy to additionally include a further and supplemental manner of breaking down or segmenting the input point cloud 2, in addition to those described with reference to the UPD module 3, GSI module 5 and graph encoder 7 as previously described. Accordingly, the specific implementation of Figure 9 supplements the previously described method as described with reference to Figure 5 with an additional encoding of features of the input point cloud 2, and combines this with the graph structure embedding as previously described before inputting this combined information into the classifier 9.

Hence, the feature encoder 15 may perform encoding in line with any prior art method of point cloud encoding. For instance, the feature encoder 15 may perform point cloud shape encoding. Hence specific implementations may use a trained point cloud shape encoder as taken from a state of the art system point cloud shape encoder system. However, any suitable point cloud encoder of choice may be used.

Hence the output from the feature encoder 15 will be a different feature embedding, and this feature embedding will be input to the feature concatenator 17 where it will be mathematically concatenated with the graph structure embedding as output from the graph encoder 7 as described in any previous implementation.

The output of the feature concatenator 17 is the combined feature embedding from feature encoder 15 and the graph structure embedding from graph encoder 7, and this forms the point cloud representation which is input into the classifier 9 for classification of the object of the input point cloud 2. With the exception of this difference, the functioning of the classifier 9 is as previously described.

Accordingly, this specific implementation takes the advantageous improved classification as provided by the system as described with reference to Figures 5, 6, 7 and 8 and supplements this with an additional form of feature encoding of the input point cloud 2. This combined encoding provides even further improvements in accuracy of classification of point clouds.

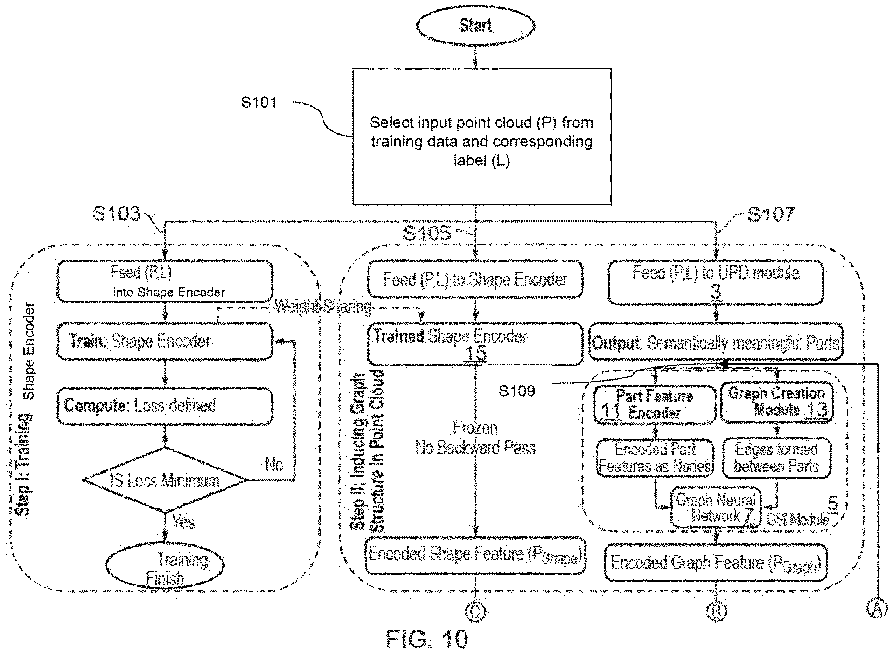

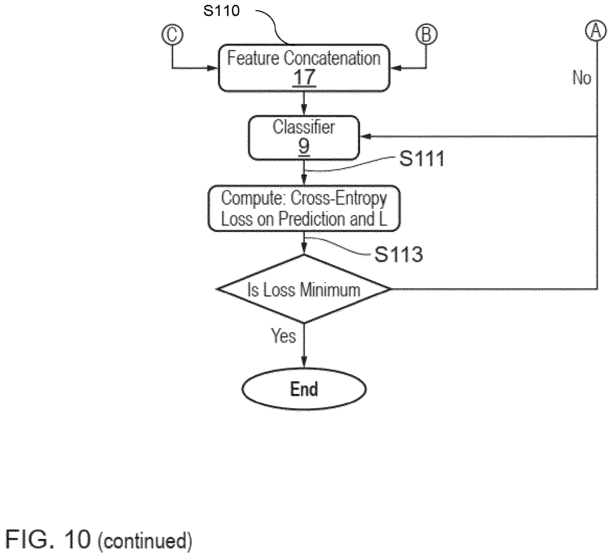

Figure 10 is a diagram illustrating a training process according to an implementation. In particular, Figure 10 represents a logic flow diagram for the stages of training the point cloud classification model 1 as described in any previous implementation. Accordingly, many of the aspects of the training process of Figure 10 are the same as have been previously depicted and described, for instance with reference to Figures 5 to 9, because the training of the point cloud model for point cloud classification may in certain instances be considered a specific version of using the point cloud classification model for classification: in a training process the classification of the point cloud is known and can be used for comparison to a predicted classification for further training, in the normal use the classification of the point cloud is not known and the predicted classification is the final output classification.

The input point cloud is from a training source domain with an associated known label, and hence the classification output by the point cloud classification model as previously described can be deemed a predicted classification and it can be compared to the known label and this comparison can be used for training the point cloud classification model. In the use of the point cloud classification as previously described, the input point cloud may have been from an unlabeled target domain and the classification output would be considered the final classification.

In particular, for instance, the UPD module 3, the GSI module 5, the graph encoder 7 (graph neural network), the classifier 9, the part feature encoder 11, the graph creation module 13, the feature encoder 15 (i.e. in a specific implementation a shape encoder as described in relation to Figure 9) and the feature concatenator 17 as shown and described in relation to Figure 10 may be the same features as described in any previous implementation, and in particular as described in reference to Figures 5 to 9. Hence duplication of the previous description in regard to these features will be avoided.

In particular, the functioning of each of the following features was previously described with reference to Figures 5 to 9 in a use stage of the point cloud classification model 1, where the point cloud classification model 1 was being used to classify a point cloud in an unseen target domain: the UPD module 3, the GSI module 5, the graph encoder 7 (graph neural network), the classifier 9, the part feature encoder 11, the graph creation module 13, the point cloud feature encoder 15 (i.e. in a specific implementation a shape encoder as described in relation to Figure 9) and the feature concatenator 17. In the training process of Figure 10, the functioning of each of these features is the same as was previously described, and will not be described further here with the exception of the following details which will be described in further detail below: the input point cloud is from a source domain of labelled point cloud data, and the point cloud classification model 1 receives this input point cloud and processes it as previously described, however the output from the classifier 9 is deemed a predicted classification label. This predicted classification label is then compared to the known classification label of the input point cloud and a comparison is made between the known and the predicted label, and on the basis of this comparison the network weights of at least one of the classifier 9, the graph encoder convolutional network 7 are adjusted. The process is then iteratively performed until a classification loss between the known label and the predicted label is determined to be at a minimum.

At this point the point cloud classification model 1 may be determined to have been trained to accurately classify point cloud objects of that particular classification, regardless of the domain and across any domain which shares the same label space. In other words, the point cloud classification model 1 may be determined to have learned, as previously described, domain invariant features of the point cloud classification, in particular to have determined parts of the point cloud for that classification which are considered meaningful, as previously described. For instance a specific example of parts considered to be meaningful is the identification of parts considered to be geometrically meaningful in that they represent or relate to properties considered to define the inherent geometric structure of a particular object classification, regardless of and invariant across domains, and hence are useful and can be used to accurately identify classifications of objects, as will be provided in other aspects of the present application.

The training process of Figure 10 includes the features of the classification process of Figure 9 as previously described, including the optional feature of the use of the point cloud feature encoder 15, and in particular the feature encoder 15 in the specific implementation of a point cloud shape encoder. This feature is optional but is depicted here for completeness.

The UPD Module 3 and the GSI module 5 are as previously described in Figures 7 and 8 respectively, and any features which are described as optional specific implementations there are also optional specific implementations here. Similarly, the graph encoder 7 is depicted as within the GSI module 5, however as previously describe it may be within or separate from the GSI module 5.

In a first stage S 101, an input point cloud (P) from the training data with a corresponding label (L) is selected.

In optional implementations which include the point cloud feature encoder 15, for instance in the form of a point cloud shape encoder as depicted in Figure 10, this first needs to be trained. Hence in optional step S103, the input point cloud is passed through the existing architecture of any suitable point cloud feature encoder 15, such as a point cloud shape encoder. As this is state of the art, this will not be described in further detail. However, in brief, Figure 10 shows an example training of a shape encoder in which the input point cloud trains a shape encoder which is using a loss minimum assessment to adjust networks weights of the encoder until the classification loss between predicted and known classification labels is determined to be a minimum. At this point the shape encoder is determined to be trained to determine shape encodings of the point cloud for a particular classification. This process is repeated across the source domain training data such that the shape encoder is trained across many classifications. Once trained, the shape encoder is used as the previously described feature encoder 15 in the optional implementations which use a feature encoder such as described with reference to Figure 9.

Step S105 is an optional step, as described with reference to Figure 9, wherein a feature encoder 15 is used in addition to the UPD module 3, GSI module 5 and graph encoder 7 of implementations of the present application such as described in relation to Figures 5 to 8. Here, as described in relation to Figure 9, the feature encoder 15 supplements the functioning of the system as described in relation to Figures 5 to 8 to provide an additional form of feature encoding (such as shape encoding) to be combined with the graph structure embedding as output from the combined functioning of the UPD module 3, GSI module 5 and graph encoder 7. This advantageously even further improves the accuracy of the classification provided by implementations of the present application.

In implementations in which Step S105 is included, this may happen before or after or in parallel to Step S107 as will be described later.

In Step S105 the input point cloud is inputted into the trained shape encoder 15, which outputs a shape encoding ('encoded shape features' as shown on Figure 10) of the input point cloud. As depicted, this stage may be frozen in the sense of having no backward pass through the trained shape encoder 15.

In Step S107 the input point cloud is input into the UPD module 3. This is the same UPD module 3 as previously described with reference to Figures 5 to 9, and functions in accordance with the description provided in relation to any of those implementations, which will not be repeated here. For instance, the functioning of the UPD module 3 may be as previously described with reference to Figure 7. Accordingly, the UPD module 3 outputs subsets of the input point cloud associated with a plurality of parts, where the parts are considered meaningful ('Semantically meaningful parts' as shown in Figure 10), or potentially meaningful when considered during the training stage, as previously described. As previously described, the UPD module 3 is unsupervised and is not trained.

In Step S109, the subsets of the input point cloud associated with a plurality of parts are input into the GSI module 5. This is the same GSI module 5 as previously described with reference to Figures 5 to 9, and functions in accordance with the description provided in relation to any of those implementations, which will not be repeated here. For instance, the functioning of the GSI module 5 may be as previously described with reference to Figure 8. Accordingly, the graph encoder 7 (graph neural network) outputs a graph structure embedding ('encoded graph feature' as depicted in Figure 10) encapsulating structural relationships between the previously determined subsets. It is noted that Figure 10 shows the part feature encoder 11 operating in a parallel logic flow with the graph creation module 11, however as previously described with reference to Figure 8, in preferred specific implementations the part feature encoder 11 and the graph creation module operate in series with the graph creation module 13 processing after the part feature encoder 11.

In implementations including step S105 - for instance in systems as previously described with reference to Figure 9 and as depicted in Figure 10 - the shape embedding ('encoded shape features' as shown on Figure 10) then needs to be combined with the graph structure embedding ('encoded graph feature' as depicted in Figure 10) in step S 110 to derive the point cloud representation for classification. This combination is performed in the feature concatenation module 17, which is the same as previously described with reference to Figure 9. Alternatively, in implementations without Step S105, the graph structure embedding output from the graph encoder 7 may be determined to be the point cloud representation and is output directly to the classifier 9, and hence step S 110 is not required.

In step S111, the point cloud representation is input into the classifier 9, which is the classifier as previously described with reference to any of Figures 5 to 9. Here the classifier 9 outputs a predicted classification for the input point cloud, and this is compared against the known classification (L). In particular, in implementations of the present application the comparison may be performed in the form of computing a loss, in particular in computing classification loss defined by the categorical cross-entropy loss function, which is a known function and will not be described further here (see for instance Anqi Mao, Mehryar Mohri, and Yutao Zhong, 2023, 'Cross Entropy Loss Functions: Theoretical Analysis and Applications'.)

In step S 113, if the classification loss - for instance as determined using the categorical cross-entropy loss function - is determined to be a minimum ('Yes'), then the training process for that point cloud is finished and the point cloud classification model, including the part feature encoder 11, the graph encoder 7 and the classifier 9, are determined to have been trained to accurately identify said input point cloud.

In Step S113, if the classification loss - for instance as determined using the categorical cross-entropy loss function - is determined not to be at a minimum ('No'), then based on this computation comparison, at least one network weight of at least one of the following encoders is adjusted: the graph encoder 7 and the classifier 9. The adjusting of the at least one network weight is for example to reduce or bring towards zero the computed difference and/or the computed classification loss.

After adjusting the network weights accordingly, the classification process is re-performed starting from for instance step S109 and optionally additionally including step S105 as previously described. The process is iteratively performed until a classification loss between the known label and the predicted label is determined to be at a minimum. At this point the point cloud classification model 1 may be determined to have been trained to accurately classify point cloud objects of that particular classification, regardless of the domain and across any domain which shares the same label space. In other words, the point cloud classification model 1 may be determined to have learned, as previously described, domain invariant features of the point cloud classification, in particular for instance to have determined subsets associated with parts of the point cloud for that classification which are considered meaningful, as previously described. For instance a specific example of parts considered to be meaningful is the identification of parts considered to be geometrically meaningful in that they represent or relate to properties considered to define the inherent geometric structure of a particular object classification, regardless of and invariant across domains, and hence are useful and can be used to accurately identify classifications of objects, as will be provided in other aspects of the present application.

This training process is then repeated until the loss is determined to be a minimum ('Yes'), then the training process for that input point cloud is finished and the point cloud classification model, including the part feature encoder 11, the graph encoder 7 and the classifier 9, are determined to have been trained to accurately identify said input point cloud.

This training process may then repeated across the source domain training data point clouds such that the point cloud classification model 1 is trained across many classifications.

In an alternative which is not depicted, the training of the shape encoder 15 that is trained may be performed in parallel to, or at the same time as, the training as performed in steps S105 and S107. In which case the Step S103 as depicted in Figure 10 is removed, and step S105 is modified such that the shape encoder 15 is initially untrained and is not frozen so that backward pass is allowed. Steps S107 to S111 are performed as previously described. Step S113 is performed as previously described with the modification that if the classification loss is determined not to be at a minimum ('No'), then in addition to adjusting at least one network weight of at least one of the graph encoder 7 and the classifier 9, at least one network weight of the feature encoder 15 is also adjusted. Hence implementations of the present application envisage both training the optional feature encoder 15 aspect before the other aspects of the system, and alternatively training the feature encoder 15 at the same time as training the other aspects of the system.

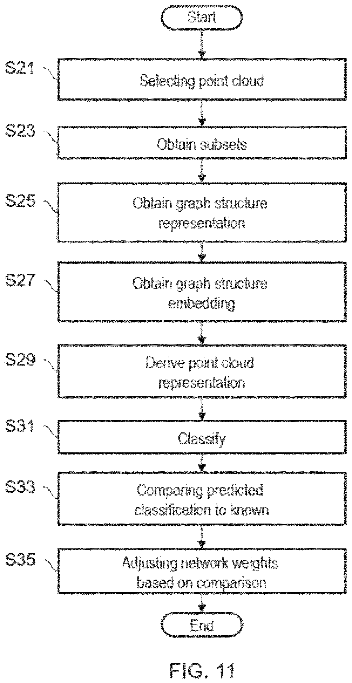

Figure 11 is a diagram illustrating a training process according to an implementation.

Step S21 comprises selecting a point cloud from training data, the training data comprising a plurality of point clouds from a source domain, said point clouds having a known classification.

Step S23 comprises obtaining a plurality of subsets of the selected point cloud associated with a plurality of parts of the selected point cloud, where said parts may be considered geometrically meaningful.

Step S25 comprises obtaining a graph structure representation of the subsets, the graph structure representation comprising nodes associated with each subset and one or more edge connecting the nodes.

Step S27 comprises obtaining a graph structure embedding encapsulating structural relationships between the subsets, comprising inputting the graph structure representation into a graph encoder convolutional neural network.

Step S29 comprises deriving a point cloud representation from the graph structure embedding.

Step S31 comprises classifying the point cloud representation, comprising inputting the point cloud representation into a classification encoder neural network to obtain a predicted classification of the selected point cloud.

Step S33 comprises comparing the predicted classification and the known classification of the selected point cloud.

Step S35 comprises adjusting, based on the comparison, at least one network weight of one of: the graph encoder convolutional neural network and the classification encoder neural network.

Any of the steps may comprise processing described with reference to Figures 5 or 10. For example, the UPD module 3 may carry out the processing of step S23, and/or the GSI module 5 may carry out any of the processing of step S25, and/or the graph encoder 7 may carry out any of the processing of step S27, and/or the classifier 9 may carry out any of the processing of step S31.

Hence a training approach may be employed as described above with reference to Figure 10.

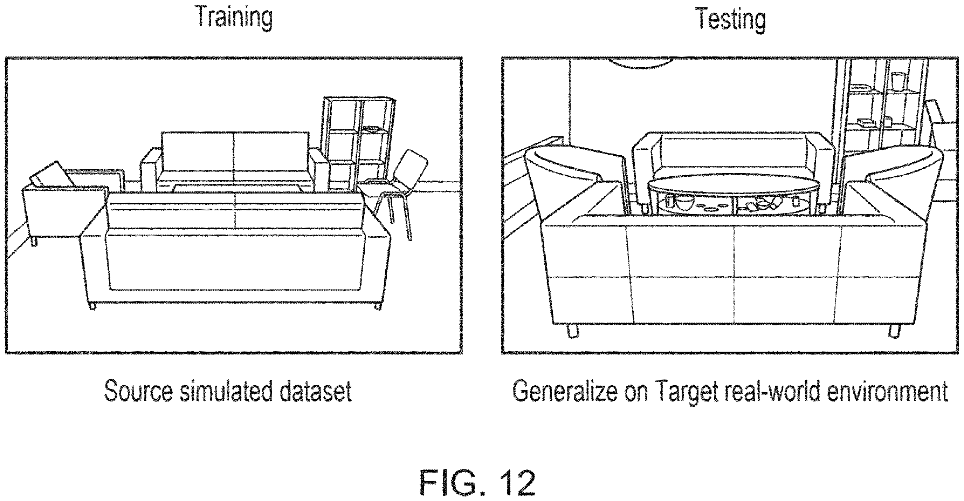

Figure 12 is a diagram illustrating a representation of an example task which may be performed by implementation of the present point cloud classification model 1 as previously described. The example task may be in the field of augmented reality. The example task is to identify the objects depicted by point clouds taken from a sensor inside a room. The training data of the source domain is a simulated synthetic data of objects in a room, and hence this example task is an example of the 'sim-to-real' scenario in point cloud classification.

The image labelled 'Training' depicts a source domain for training including simulated data for objects in a room, these objects will have known classifications. The objects of the source domain will be stored as point clouds and input into the system during a training stage, for instance as previously described in implementations of the present application such as in reference to Figure 10, as they will all have known classifications. For instance, objects present in the source domain as depicted are a chair, a sofa, and a shelving system. The objects from this source domain will thereby be used to train the system to create graph structure representations, graph structure embeddings and point cloud representations which are accurately classified by the system as previously described, whereby this training will be by adjusting the network weights of relevant encoders of the point cloud classification model 1 as previously described. Hence a point cloud classification model 1 trained using any of the processes described herein may be used to accurately identify objects in point clouds sensed inside the real room in the figure labelled 'Testing', which thereby represents the unseen target domain of the point cloud classification model 1. Hence it will be appreciated that the improved processes of implementation of the present application as previously described - for instance the improved decomposition, feature identification and feature extraction - of the point cloud objects may lead to more accurate point cloud classification performance, and in particular improved domain generalization of point cloud classification.

Whilst Figure 12 described a potential application in the field of Augmented Reality, the implementations of the present application have broad applicability across all fields which include the collection and processing of point cloud data for classification. Further example fields include autonomous driving, robotics, photogrammetry, remote sensing and computer vision. For instance, the point cloud data may be received from for instance a sensor, for instance on an autonomous vehicle or robotic arm or augmented reality device.

For instance, in the field of autonomous driving, point clouds are used to represent the environment around the vehicle. The implementation of the present application, for instance in providing improved domain generalisation from source domain to unseen target domain may advantageously enable vehicles to perform well in many different locations despite variations in the environment. In state of the art systems, a point cloud classification model trained on one city dataset (source domain) may face difficulty in adapting to new city (unseen target domain). However, by applying aspects of the implementations of the present application, point cloud classification models can enable vehicles trained in for instance a particular city to additionally operate in new cities without difficulty, reliably and accurately performing point cloud classification regardless.

In the field of robotics, by applying aspects of the implementations of the present application, robots trained to pick up objects in for instance a factory simulated environment, will be advantageously able to be used to also pick up objects in new environments by benefitting from the domain generalization capabilities of implementations of the present application.

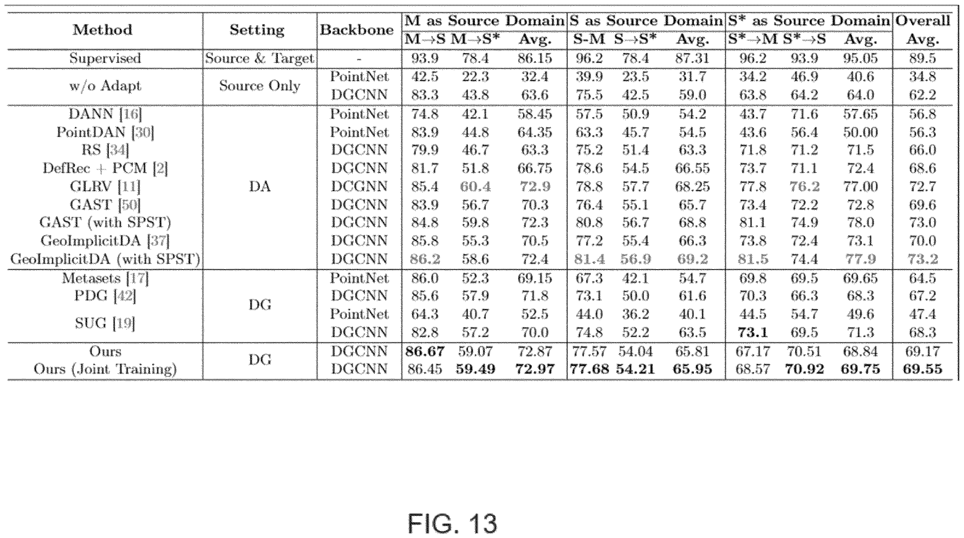

Figure 13 illustrates a table of results of applying models trained by different state of the art processes and models trained by training processes as described herein (labelled 'Ours') to a task on the dataset PointDA-10 (Qin et al., 2019, 'PointDAN: A Multi-Scale 3D Domain Adaption Network for Point Cloud Representation'). The results are in the form of class-level accuracy, i.e. (Total Number of correct predicted samples) / Total number of samples.

The following references are found in the table:

- **Setting** - the setting in which experiments are carried out. *Supervised (Source & Target)* refers to trained on source and target domain and tested on target domain directly. *w/o Adapt* refers to no adaptation techniques being used, directly trained on source domain and tested on target domain. *DA* refers to a source with data and labels as well as unlabelled target data is seen during training. *DG* refers to training on only source domain.

- **X->Y, X->Z** - refers to X as the source domain and the model has only been trained on X. Subsequently it has been tested on Y and Z.
- **M-** ModelNet - domain in the PointDA-10 dataset
- **S -** ShapeNet - domain in the PointDA-10 dataset
- **S\*** - ScanNet - domain in the PointDA-10 dataset.
- **Avg** - average accuracy of the row.

In particular, the bottom two rows of the table show results from two specific implementations of the present application, referred to in the table as *'Ours'* and *'Ours: Joint Training"*. These implementations are in line with the specific implementation as described with reference to Figures 9 and 10 of the present application in which an optional feature encoder 15 is used. In particular, in the table *'Ours'* and *'Ours: Joint Training'* refer to the operation of the UPD module 3, the GSI module 5, the Graph Encoder 7 and the classifier 9 in combination (for instance as described with reference to Figures 5 to 8), and the supplementing of this functionality with the use of the optional feature encoder 15 (for instance as described with reference to Figures 9 and 10).

In the results shown, *'Ours'* has been trained in the manner as described with reference to Figure 10 in which the feature encoder 15 is trained first, before performing training on the other aspects of the system. In *'Ours: Joint Training'* the training has been performed as described in the alternative implementation of Figure 10 as previously described, in which the feature encoder 15 is trained at the same time as the training performed on the other aspects of the system.

As can be seen, models trained by training processes as described herein (labelled *'Ours'* and *'Ours: Joint Training'*) consistently outperforms all previous state-of-the-art domain generalization methods by a significant margin in terms of providing classification accuracy. In particular, our proposed method shows important performance improvements in the Sim-to-Real scenarios (M-S\* and S-S\*) where the target dataset is real scans of objects with various challenges (Occlusions, Missing Parts, Deformations etc.)

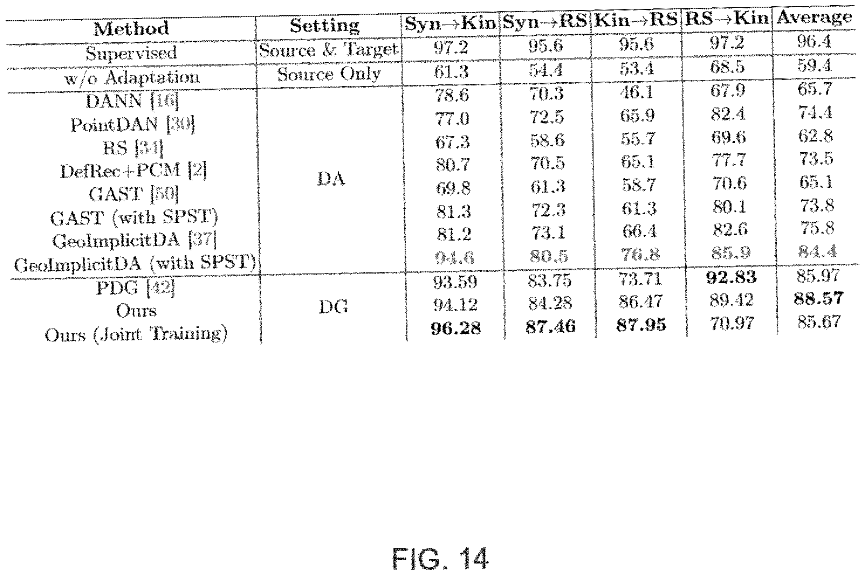

Figure 14 illustrates a table of results of applying models trained by different state of the art processes and models trained by the training process described herein (labelled 'Ours') to a task on the dataset GraspNetPC-10 H. S. Fang, C. Wang, M. Gou and C. Lu, 2020 'GraspNet-1Billion: A Large-Scale Benchmark for General Object Grasping'). The results are in the form of class-level accuracy, i.e. (Total Number of correct predicted samples) / Total number of samples.

The following references are found in the table:

- **DA** - Domain Adaptation
- **DG** - Domain Generalization
- **M** - ModelNet dataset
- **S -** ShapeNet dataset
- **S\*** - ScanNet dataset
- **Syn** - Synthetic domain

- **RS** - Realsense domain
- **Kin** - Kinect domain

In particular, the bottom two rows of the table show results from two specific implementations of the present application, referred to in the table as *'Ours'* and *'Ours: Joint Training"*. These implementations are in line with the specific implementation as described with reference to Figures 9 and 10 of the present application in which an optional feature encoder 15 is used. In particular, in the table *'(Ours)'* and *'(Ours: Joint Training)'* refer to the operation of the UPD module 3, the GSI module 5, the Graph Encoder 7 and the classifier 9 in combination (for instance as described with reference to Figures 5 to 8), and the supplementing of this functionality with the use of the optional feature encoder 15 (for instance as described with reference to Figures 9 and 10).

In the results shown, *'Ours'* has been trained in the manner as described with reference to Figure 10 in which the feature encoder 15 is trained first, before performing training on the other aspects of the system. In *'Ours: Joint Training'* the training has been performed as described in the alternative implementation of Figure 10 as previously described, in which the feature encoder 15 is trained at the same time as the training performed on the other aspects of the system.

As can be seen, models trained by training processes as described herein (labelled *'Ours'* and *'Ours: Joint Training'*) consistently outperforms all previous state-of-the-art domain generalization methods by a significant margin in terms of providing classification accuracy. In particular, our method shows important performance improvements in the Sim-to-Real scenario (Syn-Kin and Syn-RS) where the target datasets are real scans of objects cropped from actual indoor scenes scanned using two different LiDAR scanners (Kinect and Intel RealSense). In particular, methods in accordance with implementations as set out in the present application demonstrate important performance improvements in the Sim-to-Real scenarios (Syn to Kin, Syn to RS). Hence implementations of the present application are particularly advantageous in providing accurate classification of point cloud data comprising unseen real world data, even when trained on synthetic data.

Hence according to certain implementations of the present application, given a source domain consisting of point clouds and labels, it is possible to train a highly generalizable point cloud classification model, that learns improved class separation, thereby achieving better classification accuracy, on multiple unseen domains that share common label space with the source domain.

According to certain implementations of the present application, it is possible to identify and learn relationships and graph structure between parts of a point cloud that are persistent across domains for a particular class.

According to certain implementations of the present application, there is provided a novel and advantageous technique to classify point cloud objects in unseen dataset (domain generalization) by decomposing the point clouds into local part features and learning their relationship with each other by incorporating graph structure.

According to certain implementations of the present application, there is provided meaningful part decomposition of point cloud objects in unsupervised way for better domain generalization and incorporating geometry preserving graph structure in point cloud objects that are consistent across domains and achieve state-of-the-art performance in classification.

According to certain implementations of the present application, there is advantageously no requirement for annotated or pseudo-annotated data, and there is a fully unsupervised classification process.

Any training process described herein may comprises a number of iterations. The number of iterations may depend on a determination after every (or some) iterations whether the difference between the said first and second representations or the embedding difference or the loss is below an error threshold, or a determination whether the difference between the said first and second representations or the embedding difference or the loss has been below an error threshold for a certain (predetermined, predefined) number of iterations. The determination may comprise a determination as to whether a set number of iterations has been carried out, instead of or in addition to the above example determinations. For example, a training process may end based on whichever occurs first - an error convergence or a maximum number of iterations. In other words, the considerations described with respect to step S 113 may apply to any training process.

Extracting a representation of a graph may be referred to as embedding the graph or generating graph embeddings (or node embeddings). Extracting a representation of a graph may be referred to as representation learning. Extracting a representation of a graph may be considered to comprise extracting a representation of each node in the graph, and may be considered comprise combining these node representations (or node-level representations) to obtain a representation of the graph. The node embeddings or node representations may comprise information, for the node, about some or all of the other nodes in the graph and connections thereto (and therebetween).

A GNN comprises layers which may be referred to as message passing layers, responsible for combining node and edge information into node embeddings. This process may be referred to as graph convolution. For example, a node embedding may comprise information about the node and other nodes (and edges) in its neighborhood. It will be appreciated that there are a number of specific ways in which a representation may be extracted from a graph and the specific method used is not important in the methods disclosed herein.

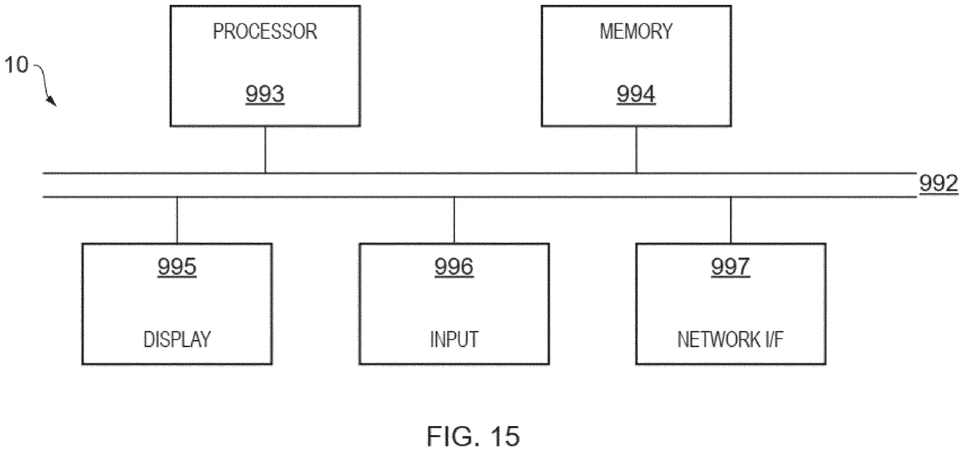

Figure 15 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S11 to S21, steps S21 to S35, steps S101 to S113 and/or any processes described above.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S11 to S21, steps S21 to S35, steps S101 to S113, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as images and/or difference amounts and/or graphs and/or detected objects and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in Figure 15. Such a computing device need not have every component illustrated in Figure 15, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at

**EP 4 625 345 A1**

least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer-implemented method of performing point cloud classification comprising:

    selecting a point cloud for classification;
    obtaining a plurality of subsets of the selected point cloud associated with a plurality of parts of the selected point cloud;
    obtaining a graph structure representation of the subsets, the graph structure representation comprising nodes associated with each subset and one or more edges connecting the nodes;
    obtaining a graph structure embedding encapsulating structural relationships between the subsets, comprising inputting the graph structure representation into a graph encoder convolutional neural network;
    deriving a point cloud representation from the graph structure embedding; and
    classifying the point cloud representation, comprising inputting the point cloud representation into a classification encoder neural network to obtain a classification of the selected point cloud.

2. The computer-implemented method of claim 1, further comprising obtaining feature embeddings of the selected point cloud, comprising inputting the selected point cloud into a pre-trained feature encoder neural network.

3. The computer-implemented method of claim 2, wherein deriving a point cloud representation from the graph structure embedding further comprises concatenating the graph structure embedding and the feature embedding to create the point cloud representation.

4. The computer-implemented method of any one of claim 2 to 3, wherein the pre-trained feature encoder neural network is a shape encoder, and wherein the feature embeddings are shape embeddings.

5. The computer-implemented method of any preceding claim, wherein obtaining the plurality of subsets of the selected point cloud associated with a plurality of parts of the selected point cloud further comprises: inputting the selected point cloud into an unsupervised part decomposition module, the unsupervised part decomposition module performing unsupervised segmenting of the selected point cloud into the subsets.

6. The computer-implemented method of claim 5, wherein the unsupervised part decomposition module uses a clustering algorithm to create candidate subsets;
   and optionally wherein the clustering algorithm may be spectral clustering.

7. The computer-implemented method of any one of claims 6 or 7, wherein the unsupervised part decomposition module may determine the subsets from the candidate subsets, the determination comprising identifying when the Shannon entropy of the candidate subsets is determined to be a minimum;

and optionally wherein the number of subsets may be in the range 2 to 6.

8. The computer-implemented method of any preceding claim, wherein obtaining a graph structure representation of the point cloud subsets, further comprises inputting the plurality of geometrically meaningful parts into a graph structure induction module, the graph structure induction module comprising a part feature encoder and a graph creation module;

the part feature encoder being a part feature encoder neural network, and generating the nodes as node representation embeddings of the subsets associated with the parts; and

the graph creation module generating the edges as edge representation embeddings of the subsets associated with the parts.

9. The computer-implemented method of claim 8, wherein the part feature encoder neural network performs farthest point sampling to breakdown the subsets into a finer-grained segmentation in order to generate the node representation embeddings.

10. The computer-implemented method of any one of claims 8 or 9, wherein the graph creation module performs a Euclidean based graph creation method to determine the edge representation embeddings of the subsets associated with the parts;

and optionally:

wherein the graph creation module creates edge connections between the subsets associated with parts based on proximity, for instance wherein an edge connection may be determined if the Euclidean distance between subsets associated with the parts falls below a specified threshold t.

11. The computer-implemented method of any preceding claim, wherein the performing point cloud classification is part of a training process for the point cloud classification model, the training process comprising:

wherein the step of selecting the point cloud for classification comprises selecting a point cloud from training data, the training data comprising a plurality of point clouds from a source domain, said point clouds having a known classification;

wherein, in the step of classifying the point cloud representation, the classification is a predicted classification of the selected point cloud; and

further comprising:

comparing the predicted classification and the known classification of the selected point cloud; and

adjusting, based on the comparison, at least one network weight of one of: the graph encoder convolutional neural network and the classification encoder neural network.

12. The computer-implemented method of claim 11, wherein the step of comparing the predicted classification and the known classification comprises determining whether a classification loss is at a minimum.

13. The computer-implemented method of any preceding claim, wherein the point cloud for classification relates to point cloud data from a sensor;

and optionally wherein the sensor is used in: an autonomous vehicle, a robot, or an augmented reality device.

14. A computer program which, when run on a computer, causes the computer to carry out a method comprising a process of point cloud classification comprising, the process comprising:

selecting a point cloud for classification;

obtaining a plurality of subsets of the selected point cloud associated with a plurality of parts of the selected point cloud;

obtaining a graph structure representation of the subsets, the graph structure representation comprising nodes associated with each subset and one or more edges connecting the nodes;

obtaining a graph structure embedding encapsulating structural relationships between the subsets, comprising inputting the graph structure representation into a graph encoder convolutional neural network;

deriving a point cloud representation from the graph structure embedding; and

classifying the point cloud representation, comprising inputting the point cloud representation into a classification encoder neural network to obtain a classification of the selected point cloud.

**15.** An information processing apparatus comprising a memory and a processor connected to the memory, wherein the processor is configured to perform a method comprising point cloud classification, the process comprising:

selecting a point cloud for classification;

obtaining a plurality of subsets of the selected point cloud associated with a plurality of parts of the selected point cloud;

obtaining a graph structure representation of the subsets, the graph structure representation comprising nodes associated with each subset and one or more edges connecting the nodes;

obtaining a graph structure embedding encapsulating structural relationships between the subsets, comprising inputting the graph structure representation into a graph encoder convolutional neural network;

deriving a point cloud representation from the graph structure embedding; and

classifying the point cloud representation, comprising inputting the point cloud representation into a classification encoder neural network to obtain a classification of the selected point cloud.

FIG. 1

FIG. 2

FIG. 3

FIG. 3 (continued)

**Algorithm 1:** SRG unsupervised segmentation

**Input:** $P = \{p_n \in R^3\}$      `// x, y, z coordinates`
    $N = \{n_n \in R^3\}$      `// normal value`
    $E = \{e_n \in R^n\}$      `// Euclidean distance`
    $\Omega(\cdot)$      `// nearest neighbour function`
**Output:** $L = \{l_n \in R^1\}$      `// segmentation label of each point`
**Initialize:** $S := \varnothing$      `// set seed list to empty`
    $A := rand\{1, 2 ... |P|\}$      `// select random point to available point list as seed`
**for** $t = 1$ *to* $T$ **do**
    **while** $A \neq \varnothing$ **do**
        $a \leftarrow first\ item\ in\ A$
        $neighbours \leftarrow \Omega(a)$ **for** $neighbours \neq \varnothing$ **do**
            $neighbour \leftarrow rand(neighbours)$
            **if** $E(a, neighbour) \leq e_t h \land N(a, neighbour) \leq e_t h \land neighbour \notin S$ **then**
                $append\ neighbour\ to\ S\ remove\ neighbour\ from\ neighbours$
            **else**
                $remove\ neighbour\ from\ neighbours$
        $add\ a\ to\ S$

FIG. 4

EP 4 625 345 A1

FIG. 4 (continued)

FIG. 5

```
                    ┌─────────────┐
                    │    Start    │
                    └──────┬──────┘
                           │
                           ▼
          ┌────────────────────────────────┐
   S11 ───┤      Selecting point cloud      │
          └────────────────┬───────────────┘
                           │
                           ▼
          ┌────────────────────────────────┐
   S13 ───┤         Obtain subsets          │
          └────────────────┬───────────────┘
                           │
                           ▼
          ┌────────────────────────────────┐
   S15 ───┤     Obtain graph structure      │
          │        representation           │
          └────────────────┬───────────────┘
                           │
                           ▼
          ┌────────────────────────────────┐
   S17 ───┤     Obtain graph structure      │
          │          embedding              │
          └────────────────┬───────────────┘
                           │
                           ▼
          ┌────────────────────────────────┐
   S19 ───┤      Derive point cloud         │
          │        representation           │
          └────────────────┬───────────────┘
                           │
                           ▼
          ┌────────────────────────────────┐
   S21 ───┤           Classify              │
          └────────────────┬───────────────┘
                           │
                           ▼
                    ┌─────────────┐
                    │     End     │
                    └─────────────┘
```

FIG. 6

**FIG. 7**

Input Point Cloud 2

UPD Module 3

Clustering Algorithm 12

Geometry-based Entropy Compute 14

Entropy Minimization for Optimal Clustering

UPD Output 4

GSI Module 5

UPD Output 4

Part feature encoder 11 → Graph creation module 13

GSI Output 6

FIG. 8

FIG. 9

FIG. 10

FIG. 10 (continued)

```
                    ┌─────────────┐
                    │    Start    │
                    └──────┬──────┘
                           │
                           ▼
S21  ┌────────────────────────────────────┐
     │         Selecting point cloud       │
     └──────────────────┬─────────────────┘
                        │
                        ▼
S23  ┌────────────────────────────────────┐
     │           Obtain subsets            │
     └──────────────────┬─────────────────┘
                        │
                        ▼
S25  ┌────────────────────────────────────┐
     │        Obtain graph structure       │
     │           representation            │
     └──────────────────┬─────────────────┘
                        │
                        ▼
S27  ┌────────────────────────────────────┐
     │        Obtain graph structure       │
     │             embedding               │
     └──────────────────┬─────────────────┘
                        │
                        ▼
S29  ┌────────────────────────────────────┐
     │         Derive point cloud          │
     │           representation            │
     └──────────────────┬─────────────────┘
                        │
                        ▼
S31  ┌────────────────────────────────────┐
     │              Classify               │
     └──────────────────┬─────────────────┘
                        │
                        ▼
S33  ┌────────────────────────────────────┐
     │        Comparing predicted          │
     │       classification to known       │
     └──────────────────┬─────────────────┘
                        │
                        ▼
S35  ┌────────────────────────────────────┐
     │       Adjusting network weights     │
     │         based on comparison         │
     └──────────────────┬─────────────────┘
                        │
                        ▼
                 ┌─────────────┐
                 │     End     │
                 └─────────────┘
```

FIG. 11

Training — Source simulated dataset

Testing — Generalize on Target real-world environment

FIG. 12

| Method | Setting | Backbone | M as Source Domain | | | S as Source Domain | | | S* as Source Domain | | | Overall |
| --- | --- | --- | --- | --- | --- | --- | --- | --- | --- | --- | --- | --- |
| | | | M→S | M→S* | Avg. | S-M | S→S* | Avg. | S*→M | S*→S | Avg. | Avg. |
| Supervised | Source & Target | - | 93.9 | 78.4 | 86.15 | 96.2 | 78.4 | 87.31 | 96.2 | 93.9 | 95.05 | 89.5 |
| w/o Adapt | Source Only | PointNet | 42.5 | 22.3 | 32.4 | 39.9 | 23.5 | 31.7 | 34.2 | 46.9 | 40.6 | 34.8 |
| | | DGCNN | 83.3 | 43.8 | 63.6 | 75.5 | 42.5 | 59.0 | 63.8 | 64.2 | 64.0 | 62.2 |
| DANN [16] | DA | PointNet | 74.8 | 42.1 | 58.45 | 57.5 | 50.9 | 54.2 | 43.7 | 71.6 | 57.65 | 56.8 |
| PointDAN [30] | | PointNet | 83.9 | 44.8 | 64.35 | 63.3 | 45.7 | 54.5 | 43.6 | 56.4 | 50.00 | 56.3 |
| RS [34] | | DGCNN | 79.9 | 46.7 | 63.3 | 75.2 | 51.4 | 63.3 | 71.8 | 71.2 | 71.5 | 66.0 |
| DefRec + PCM [2] | | DGCNN | 81.7 | 51.8 | 66.75 | 78.6 | 54.5 | 66.55 | 73.7 | 71.1 | 72.4 | 68.6 |
| GLRV [11] | | DCGNN | 85.4 | 60.4 | 72.9 | 78.8 | 57.7 | 68.25 | 77.8 | 76.2 | 77.00 | 72.7 |
| GAST [50] | | DGCNN | 83.9 | 56.7 | 70.3 | 76.4 | 55.1 | 65.7 | 73.4 | 72.2 | 72.8 | 69.6 |
| GAST (with SPST) | | DGCNN | 84.8 | 59.8 | 72.3 | 80.8 | 56.7 | 68.8 | 81.1 | 74.9 | 78.0 | 73.0 |
| GeoImplicitDA [37] | | DGCNN | 85.8 | 55.3 | 70.5 | 77.2 | 55.4 | 66.3 | 73.8 | 72.4 | 73.1 | 70.0 |
| GeoImplicitDA (with SPST) | | DGCNN | 86.2 | 58.6 | 72.4 | 81.4 | 56.9 | 69.2 | 81.5 | 74.4 | 77.9 | 73.2 |
| Metasets [17] | DG | PointNet | 86.0 | 52.3 | 69.15 | 67.3 | 42.1 | 54.7 | 69.8 | 69.5 | 69.65 | 64.5 |
| PDG [42] | | DGCNN | 85.6 | 57.9 | 71.8 | 73.1 | 50.0 | 61.6 | 70.3 | 66.3 | 68.3 | 67.2 |
| SUG [19] | | PointNet | 64.3 | 40.7 | 52.5 | 44.0 | 36.2 | 40.1 | 44.5 | 54.7 | 49.6 | 47.4 |
| | | DGCNN | 82.8 | 57.2 | 70.0 | 74.8 | 52.2 | 63.5 | **73.1** | 69.5 | 71.3 | 68.3 |
| Ours | DG | DGCNN | **86.67** | 59.07 | 72.87 | 77.57 | 54.04 | 65.81 | 67.17 | 70.51 | 68.84 | 69.17 |
| Ours (Joint Training) | | DGCNN | 86.45 | **59.49** | **72.97** | **77.68** | **54.21** | **65.95** | 68.57 | **70.92** | **69.75** | **69.55** |

FIG. 13

| Method | Setting | Syn→Kin | Syn→RS | Kin→RS | RS→Kin | Average |
|---|---|---|---|---|---|---|
| Supervised | Source & Target | 97.2 | 95.6 | 95.6 | 97.2 | 96.4 |
| w/o Adaptation | Source Only | 61.3 | 54.4 | 53.4 | 68.5 | 59.4 |
| DANN [16] | DA | 78.6 | 70.3 | 46.1 | 67.9 | 65.7 |
| PointDAN [30] | DA | 77.0 | 72.5 | 65.9 | 82.4 | 74.4 |
| RS [34] | DA | 67.3 | 58.6 | 55.7 | 69.6 | 62.8 |
| DefRec+PCM [2] | DA | 80.7 | 70.5 | 65.1 | 77.7 | 73.5 |
| GAST [50] | DA | 69.8 | 61.3 | 58.7 | 70.6 | 65.1 |
| GAST (with SPST) | DA | 81.3 | 72.3 | 61.3 | 80.1 | 73.8 |
| GeoImplicitDA [37] | DA | 81.2 | 73.1 | 66.4 | 82.6 | 75.8 |
| GeoImplicitDA (with SPST) | DA | 94.6 | 80.5 | 76.8 | 85.9 | 84.4 |
| PDG [42] | DG | 93.59 | 83.75 | 73.71 | **92.83** | 85.97 |
| Ours | DG | 94.12 | 84.28 | 86.47 | 89.42 | **88.57** |
| Ours (Joint Training) | DG | **96.28** | **87.46** | **87.95** | 70.97 | 85.67 |

FIG. 14

EP 4 625 345 A1

FIG. 15

Europäisches
Patentamt

European
Patent Office

Office européen
des brevets

# EUROPEAN SEARCH REPORT

**Application Number**

EP 24 19 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUAN SHUMIN: "Semantic segmentation of point cloud based on graph neural network", 20230801, vol. 12754, August 2023 (2023-08), pages 127541G-127541G, XP060185561, ISSN: 0277-786X, DOI: 10.1117/12.2684181 ISBN: 978-1-5106-6756-3 | 1-6,8, 10-15 | INV. G06V10/26 G06V10/426 G06V10/80 G06V10/82 G06V20/70 |
| Y | * pages 1-4 * | 7,9 | |
| | ----- | | |
| Y,D | WEINMANN MARTIN ET AL: "Semantic point cloud interpretation based on optimal neighborhoods, relevant features and efficient classifiers", ISPRS JOURNAL OF PHOTOGRAMMETRY AND REMOTE SENSING, AMSTERDAM [U.A.] : ELSEVIER, AMSTERDAM, NL, vol. 105, 27 February 2015 (2015-02-27), pages 286-304, XP029575087, ISSN: 0924-2716, DOI: 10.1016/J.ISPRSJPRS.2015.01.016 * Sect. 3.1.3 * | 7 | |
| | ----- | | TECHNICAL FIELDS SEARCHED (IPC) |
| Y | CHARLES R QI: "Pointnet++: deep hierarchical feature learning on point sets in a metric space", ARXIV.ORG, 7 June 2017 (2017-06-07), XP093159349, Ithaca DOI: 10.48550/arXiv.1706.02413 * page 2, paragraph 2 * | 9 | G06V |
| | ----- | | |
| | -/-- | | |

The present search report has been drawn up for all claims

| Place of search | Date of completion of the search | Examiner |
|---|---|---|
| The Hague | 20 January 2025 | Hermes, Lothar |

EPO FORM 1503 03.82 (P04C01)

Europäisches
Patentamt

European
Patent Office

Office européen
des brevets

# EUROPEAN SEARCH REPORT

Application Number

EP 24 19 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM SANGJIN ET AL: "A 54.7 fps 3D Point Cloud Semantic Segmentation Processor with Sparse Grouping Based Dilated Graph Convolutional Network for Mobile Devices", 2019 IEEE INTERNATIONAL SYMPOSIUM ON CIRCUITS AND SYSTEMS (ISCAS), IEEE, 12 October 2020 (2020-10-12), pages 1-5, XP033932171, DOI: 10.1109/ISCAS45731.2020.9181100 * pages 1-8 * | 1,14,15 | |
| X | LIUYUE XIE ET AL: "Multi-Resolution Graph Neural Network for Large-Scale Pointcloud Segmentation", ARXIV.ORG, CORNELL UNIVERSITY LIBRARY, 201 OLIN LIBRARY CORNELL UNIVERSITY ITHACA, NY 14853, 18 September 2020 (2020-09-18), XP081766208, * figures 2-5 * | 1,14,15 | |
| | | | TECHNICAL FIELDS SEARCHED (IPC) |

The present search report has been drawn up for all claims

| Place of search | Date of completion of the search | Examiner |
|---|---|---|
| The Hague | 20 January 2025 | Hermes, Lothar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUANG et al.** *MetaSets: Meta-Learning on Point Sets for Generalizable Representations*, 2022
- **WEI et al.** *Learning Generalizable Part-based Feature Representation for 3D Point Cloud*, 2022
- **HUANG et al.** *SUG: Single-dataset Unified Generalization for 3D Point Cloud Classification*, 2023
- **HU et al.** *Unsupervised Segmentation for Terracotta Warrior Point Cloud (SRG-Net)*, 2022
- **KIPF** ; **WELLING**. *Semi-Supervised Classification with Graph Convolutional Networks*, 2017
- **VON LUXBURG**. A Tutorial on Spectral Clustering. *Statistics and Computing*, 2007, vol. 17 (4), 2007
- **WEINMANN et al.** Semantic Point cloud interpretation based on optimal neighborhoods, relevant features and efficient classifiers. *ISPRS Journal of Photogrammetry and Remote Sensing*, 2015
- **ANQI MAO** ; **MEHRYAR MOHRI** ; **YUTAO ZHONG**. *Cross Entropy Loss Functions: Theoretical Analysis and Applications*, 2023
- **QIN et al.** *PointDAN: A Multi-Scale 3D Domain Adaption Network for Point Cloud Representation*, 2019
- **H. S. FANG** ; **C. WANG** ; **M. GOU** ; **C. LU**. *GraspNet-1Billion: A Large-Scale Benchmark for General Object Grasping*, 2020